(19) **Europäisches Patentamt / European Patent Office / Office européen des brevets**

(11) **EP 3 586 084 B1**

(12) **FASCICULE DE BREVET EUROPEEN**

(45) Date de publication et mention de la délivrance du brevet:
**06.11.2024 Bulletin 2024/45**

(21) Numéro de dépôt: **18709698.7**

(22) Date de dépôt: **23.02.2018**

(51) Classification Internationale des Brevets (IPC):
*G01C 19/58* *(2006.01)*    *G01P 15/093* *(2006.01)*

(52) Classification Coopérative des Brevets (CPC):
**G01C 19/58; G01P 15/08;** G01C 21/165

(86) Numéro de dépôt international:
**PCT/FR2018/050440**

(87) Numéro de publication internationale:
**WO 2018/154254 (30.08.2018 Gazette 2018/35)**

(54) **SYSTÈME ET PROCÉDÉ HYBRIDE DE MESURE INERTIELLE BASÉ SUR UN INTERFÉROMÈTRE À ATOMES FROIDS ET À IMPULSIONS LUMINEUSES**

HYBRIDES TRÄGHEITSMESSSYSTEM UND VERFAHREN MIT VERWENDUNG EINES LICHTPULSKALTATOMINTERFEROMETERS

HYBRID INERTIAL MEASUREMENT SYSTEM AND METHOD USING A LIGHT PULSE COLD ATOM INTERFEROMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2017 FR 1751457**

(43) Date de publication de la demande:
**01.01.2020 Bulletin 2020/01**

(73) Titulaires:
• **EXAIL**
**78100 Saint-Germain-en-Laye (FR)**
• **Institut d'Optique Graduate School**
**91120 Palaiseau (FR)**
• **CENTRE NATIONAL DE LA RECHERCHE SCIENTIFIQUE**
**75016 Paris (FR)**
• **Université de Bordeaux**
**33000 Bordeaux (FR)**

(72) Inventeurs:
• **BARRETT, Brynle**
**33000 Bordeaux (FR)**
• **BATTELIER, Baptiste**
**33170 Gradignan (FR)**
• **BOUYER, Philippe**
**33400 Talence (FR)**
• **NAPOLITANO, Fabien**
**78750 Mareil-Marly (FR)**

(74) Mandataire: **Jacobacci Coralis Harle**
**32, rue de l'Arcade**
**75008 Paris (FR)**

(56) Documents cités:
**EP-A2- 2 685 212    EP-A2- 2 685 212**

• **S\'EBASTIEN MERLET ET AL: "Operating an atom interferometer beyond its linear range", ARXIV.ORG, CORNELL UNIVERSITY LIBRARY, 201 OLIN LIBRARY CORNELL UNIVERSITY ITHACA, NY 14853, 1 June 2008 (2008-06-01), XP080420697, DOI: 10.1088/0026-1394/46/1/011**
• **LAUTIER J ET AL: "Hybridizing matter-wave and classical accelerometers", APPLIED PHYSICS LETTERS, AMERICAN INSTITUTE OF PHYSICS, 2 HUNTINGTON QUADRANGLE, MELVILLE, NY 11747, vol. 105, no. 14, 6 October 2014 (2014-10-06), XP012190775, ISSN: 0003-6951, [retrieved on 19010101], DOI: 10.1063/1.4897358**
• **LE GOU\"ET J ET AL: "Limits to the sensitivity of a low noise compact atomic gravimeter", ARXIV.ORG, CORNELL UNIVERSITY LIBRARY, 201 OLIN LIBRARY CORNELL UNIVERSITY ITHACA, NY 14853, 8 January 2008 (2008-01-08), XP080347212, DOI: 10.1007/S00340-008-3088-1**

- REMI GEIGER ET AL: "Detecting inertial effects with airborne matter-wave interferometry", ARXIV.ORG, CORNELL UNIVERSITY LIBRARY, 201 OLIN LIBRARY CORNELL UNIVERSITY ITHACA, NY 14853, 27 September 2011 (2011-09-27), XP080529229, DOI: 10.1038/NCOMMS1479
- WILLIS KARA M: "Air Force Institute of Technology AFIT Scholar Theses and Dissertations Student Graduate Works Signal Processing in Cold Atom Interferometry- Based INS", 1 January 2014 (2014-01-01), XP055876762, Retrieved from the Internet <URL:https://scholar.afit.edu/cgi/viewcontent.cgi?article=1636&context=etd> [retrieved on 20220107]
- S\'EBASTIEN MERLET ET AL: "Operating an atom interferometer beyond its linear range", ARXIV.ORG, CORNELL UNIVERSITY LIBRARY, 201 OLIN LIBRARY CORNELL UNIVERSITY ITHACA, NY 14853, 1 June 2008 (2008-06-01), XP080420697, DOI: 10.1088/0026-1394/46/1/011
- LAUTIER J ET AL: "Hybridizing matter-wave and classical accelerometers", APPLIED PHYSICS LETTERS, AMERICAN INSTITUTE OF PHYSICS, 2 HUNTINGTON QUADRANGLE, MELVILLE, NY 11747, vol. 105, no. 14, 6 October 2014 (2014-10-06), XP012190775, ISSN: 0003-6951, [retrieved on 19010101], DOI: 10.1063/1.4897358
- LE GOU\"ET J ET AL: "Limits to the sensitivity of a low noise compact atomic gravimeter", ARXIV.ORG, CORNELL UNIVERSITY LIBRARY, 201 OLIN LIBRARY CORNELL UNIVERSITY ITHACA, NY 14853, 8 January 2008 (2008-01-08), XP080347212, DOI: 10.1007/S00340-008-3088-1
- REMI GEIGER ET AL: "Detecting inertial effects with airborne matter-wave interferometry", ARXIV.ORG, CORNELL UNIVERSITY LIBRARY, 201 OLIN LIBRARY CORNELL UNIVERSITY ITHACA, NY 14853, 27 September 2011 (2011-09-27), XP080529229, DOI: 10.1038/NCOMMS1479
- WILLIS KARA M: "Air Force Institute of Technology AFIT Scholar Theses and Dissertations Student Graduate Works Signal Processing in Cold Atom Interferometry- Based INS", 1 January 2014 (2014-01-01), XP055876762, Retrieved from the Internet <URL:https://scholar.afit.edu/cgi/viewcontent.cgi?article=1636&context=etd> [retrieved on 20220107]
- S\'EBASTIEN MERLET ET AL: "Operating an atom interferometer beyond its linear range", ARXIV.ORG, CORNELL UNIVERSITY LIBRARY, 201 OLIN LIBRARY CORNELL UNIVERSITY ITHACA, NY 14853, 1 June 2008 (2008-06-01), XP080420697, DOI: 10.1088/0026-1394/46/1/011
- LAUTIER J ET AL: "Hybridizing matter-wave and classical accelerometers", APPLIED PHYSICS LETTERS, A I P PUBLISHING LLC, US, vol. 105, no. 14, 6 October 2014 (2014-10-06), XP012190775, ISSN: 0003-6951, [retrieved on 19010101], DOI: 10.1063/1.4897358
- LE GOU\ET J ET AL: "Limits to the sensitivity of a low noise compact atomic gravimeter", ARXIV.ORG, CORNELL UNIVERSITY LIBRARY, 201 OLIN LIBRARY CORNELL UNIVERSITY ITHACA, NY 14853, 8 January 2008 (2008-01-08), XP080347212, DOI: 10.1007/S00340-008-3088-1
- REMI GEIGER ET AL: "Detecting inertial effects with airborne matter-wave interferometry", ARXIV.ORG, CORNELL UNIVERSITY LIBRARY, 201 OLIN LIBRARY CORNELL UNIVERSITY ITHACA, NY 14853, 27 September 2011 (2011-09-27), XP080529229, DOI: 10.1038/NCOMMS1479

**Description**

DOMAINE TECHNIQUE AUQUEL SE RAPPORTE L'INVENTION

La présente invention concerne de manière générale le domaine des instruments de mesure inertiels pour mesurer une vitesse de rotation ou une accélération locale due par exemple à la gravité.

Elle concerne plus particulièrement un instrument et un procédé de mesure inertiel basé sur l'utilisation d'un interféromètre à atomes froids pour des mesures de très grande précision.

Elle concerne plus particulièrement un capteur inertiel d'accélération, de gravité et/ou de rotation basé notamment sur un interféromètre atomique.

ARRIERE-PLAN TECHNOLOGIQUE

Les capteurs inertiels basés sur l'interférométrie atomique offrent une grande sensibilité et trouvent des applications en navigation inertielle, en sismologie ou en géophysique pour mesurer localement la gravité.

Depuis une vingtaine d'années, les techniques d'interférométrie atomique ont permis de développer de nouveaux instruments de mesure, par exemple des gravimètres, gradiomètres, accéléromètres, gyroscopes, horloges atomiques et capteurs de champ électro-magnétique.

Un interféromètre atomique combine des technologies optiques et atomiques. Un interféromètre à atomes froids est un dispositif dans lequel des ondes de matière se propagent le long de chemins séparés spatialement qui délimitent une surface fermée. Un interféromètre atomique est sensible aux effets inertiels tels que les accélérations et les rotations.

D'une part, un interféromètre atomique comporte une source d'atomes et un piège à atomes froids configuré pour générer une bouffée d'atomes se propageant initialement dans une direction déterminée. D'autre part, l'interféromètre atomique comporte une source laser émettant une séquence d'impulsions lumineuses d'interrogation destinées à interagir avec la structure fine des atomes par transfert de photons. Enfin, l'interféromètre atomique comporte un dispositif de mesure de l'état de l'atome.

Les systèmes d'interférométrie atomique ont considérablement progressé depuis le développement des techniques de refroidissement d'atomes dans les années 1980 et 1990. Les systèmes d'interférométrie atomique ont une sensibilité supérieure de plusieurs ordres de grandeur à celle des capteurs mécaniques conventionnels. Toutefois, ces systèmes d'interférométrie atomique sont confrontés à des limites en termes de robustesse aux inclinaisons et aux vibrations. D'autre part, les systèmes d'interférométrie atomique ont aujourd'hui une gamme de sensibilité réduite par comparaison avec les capteurs conventionnels.

Selon l'orientation de la source d'atomes et de l'interféromètre atomique, il est ainsi possible de mesurer une accélération et/ou une rotation suivant une direction déterminée. Les interféromètres atomiques permettent des mesures extrêmement précises. Les interféromètres atomiques trouvent des applications dans les senseurs inertiels de type gravimètre, gradiomètre, accéléromètre et gyromètre à atome froids.

Une application particulièrement importante de l'interférométrie atomique concerne les accéléromètres à atomes froids (CAA). La plupart des accéléromètres à atomes froids (CAA) sont construits dans une configuration de gravimètre, dont le but est de mesurer l'accélération gravitationnelle le plus précisément possible. L'axe de mesure d'un gravimètre est défini par la normale à la surface d'un miroir rétro-réfléchissant disposé de manière à réfléchir le champ d'interrogation vers le nuage d'atomes froids. Cette normale est généralement alignée sur la direction verticale. Le miroir rétro-réfléchissant détermine ainsi un référentiel du capteur inertiel à atomes froids. Ces accéléromètres à atomes froids reposent de manière critique sur ce référentiel.

La plupart des accéléromètres à atomes froids sont des systèmes encombrants et lourds conçus pour fonctionner dans un environnement contrôlé de laboratoire et dans une gamme d'accélération limitée.

Dans les applications mobiles, par exemple de navigation inertielle, différents facteurs limitent principalement le fonctionnement et les performances des accéléromètres à atomes froids. Premièrement, l'interféromètre ne fonctionne plus lorsque son orientation varie de manière aléatoire ou que ses mouvements sont aléatoires. En effet, les mouvements du système inertiel nuisent à la stabilité de la surface réfléchissante. D'autre part, un désalignement entre la normale au miroir et l'axe vertical local introduit une erreur systématique de mesure. Ces questions sont de nature technique et résultent de l'utilisation des capteurs inertiels à atomes froids en dehors de leur zone de fonctionnement nominal.

La publication J. Le Gouët et al. « Limits of the sensitivity of a low noise compact atomic gravimeter », Appl. Phys. B 92, 133-144 (2008) décrit un gravimètre à atomes froids et une technique de compensation des vibrations. Selon cette publication, un sismomètre fixé au miroir rétro-réfléchissant acquiert des mesures de vibrations externes et une boucle de pré-compensation permet de corriger, en fonction des mesures interférométriques précédentes, le déphasage entre deux sources laser du système de génération d'impulsions Raman pour contrebalancer le déphasage interférométrique induit par ces vibrations. Toutefois, l'efficacité de la réjection des vibrations reste limitée en pratique.

De plus, le sismomètre opérant comme un filtre passe-haut, les vibrations de basse fréquence persistent sur les mesures de gravimétrie.

La publication S. Merlet et al. « Operating an atom interferometer beyond its linear range », Metrologia 46, 87-94 (2009) décrit un gravimètre à atomes froids et compare une technique de correction post-process par ajustement de frange (fringe fitting) avec une technique de correction des vibrations entre deux mesures interférométriques. Selon cette publication, la technique d'ajustement de frange post-process donne de meilleurs résultats que la correction des vibrations, qui présente cependant une meilleure résolution temporelle.

La publication R. Geiger et al. (« Detecting inertial effects with airborne matter-wave interferometry », Nature Comm., 2 :474, DOI : 10.1038/ncomms1479, 2011) décrit une méthode d'hybridation de mesures d'accélération provenant d'accéléromètres mécaniques avec des mesures provenant d'un interféromètre atomique. Un accéléromètre mécanique permet d'estimer le déphasage inertiel pour en déduire un nombre de demi-franges, de manière à recentrer le déphasage de l'interféromètre atomique sur une frange centrale. Puis, la mesure de déphasage par l'interféromètre atomique est inversée dans cette demi-frange pour obtenir une valeur plus précise du déphasage. On calcule ensuite la somme de la mesure grossière de déphasage obtenue par l'accéléromètre mécanique et de la mesure fine de déphasage obtenue par l'interféromètre atomique. Cette méthode et ce dispositif hybride permettent de fournir des mesures continues et d'étendre la gamme de mesure grâce au capteur classique, tout en bénéficiant de la très grande précision et de la stabilité à long terme du capteur inertiel à atomes froids.

Le document J. Lautier et al. « Hybridizing matter-wave and classical accelerometers » décrit un système et une méthode d'hybridation de mesures d'accélération provenant d'un accéléromètre mécanique classique avec des mesures provenant d'un accéléromètre interférométrique à atomes froids. Le système comporte en outre une boucle de pré-compensation en temps réel par ajustement de la phase du laser pour limiter l'influence des vibrations sur les mesures interférométriques. Ce dispositif et cette méthode d'hybridation permettent d'obtenir une très grande précision sur une grande dynamique de mesure avec une stabilité à long terme. Toutefois, la gamme de fonctionnement d'un accéléromètre interférométrique à atomes froids reste limitée en dynamique et en direction d'accélération.

La publication Wills Kara, « Air Force Institute of Technology AFIT Scholar Theses and Dissertations Student Graduate Works Signal Processing in Cold Atom Interferometry Based INS », 2014-01-01, XP055876762, p. 43, divulgue un modèle de système basé sur la combinaison, dans un filtre de Kalman, des mesures issues d'un interféromètre à atomes froids (CAI) et d'un capteur inertiel conventionnel (INS).

Le problème principal rencontré lors du fonctionnement d'un capteur inertiel basé sur un interféromètre atomique est que du fait de sa grande sensibilité, des vibrations même de faible amplitude et de basse fréquence, peuvent surpasser les mesures de déphasage. Comme l'interféromètre atomique a une réponse périodique non-linéaire, ce qui limite sa dynamique, les franges d'interférences peuvent être brouillées par des accélérations aléatoires causées par les vibrations. Pour surmonter cette difficulté, il est nécessaire d'étendre la gamme de sensibilité d'un capteur inertiel à atomes froids, pour extraire les mesures sur un grand nombre de franges ou d'asservir de manière dynamique la frange centrale par rapport à un signal d'accélération variant fortement.

Dans un gravimètre à atomes froids, soumis à la force de gravité, il est connu d'appliquer une modulation linéaire à la fréquence laser des faisceaux Raman pour compenser un décalage induit par effet Doppler entre faisceaux contra-propagatifs se propageant dans la direction verticale. Le coefficient de la rampe de fréquence est fixe et pré-déterminé. Cette compensation permet de compenser une accélération constante dans une direction prédéterminée, notamment due à l'effet Doppler entre les faisceaux Raman contra-propagatifs suivant l'axe vertical

Toutefois, cette compensation ne permet pas de corriger de manière générale toutes les vibrations ou accélérations parasites, dans une direction quelconque.

OBJET DE L'INVENTION

Afin de remédier à l'inconvénient précité de l'état de la technique, la présente invention propose un système hybride de mesure inertielle selon la revendication 1.

Ce système permet de corriger la fréquence du laser et pas seulement sa phase. De plus, la correction est effectuée en temps réel pendant la mesure du capteur interférométrique à atomes froids et non pas entre deux mesures interférométriques.

Ce système permet aussi de compenser en temps réel les accélérations continues et/ou modulées en fréquence du cadre de référence par rapport aux atomes froids, dues par exemple au mouvement du véhicule sur lequel le système inertiel est embarqué. Ainsi, ce système permet d'éviter une chute de sensibilité de la mesure due aux mouvements du senseur.

Ce système permet de compenser des déphasages parasites sur les franges d'interférence, dus aux vibrations mécaniques du cadre de référence. En effet, on mesure directement les vibrations du cadre lié au miroir rétro-réfléchissant pour asservir en temps réel la fréquence optique du laser.

De plus, ce système permet de recentrer l'interférogramme sur une frange centrale, où l'accélération absolue peut être mesurée suivant l'axe sensible du système inertiel. Ceci permet avantageusement de mesurer des dérives lentes de l'orientation de l'axe de mesure du système inertiel.

D'autres caractéristiques non limitatives et avantageuses du système hybride de mesure inertielle conforme à l'invention, prises individuellement ou selon toutes les combinaisons techniquement possibles, sont les suivantes :

- le cadre de référence inertiel comporte un composant optique réfléchissant disposé de manière à rétro-réfléchir la séquence d'impulsions laser et à générer une séquence d'impulsions laser contra-propageantes en direction de la bouffée d'atomes froids, le capteur inertiel conventionnel étant fixé au composant optique réfléchissant du capteur inertiel interférométrique à atomes froids ;
- le système de traitement du signal est adapté pour générer en outre un signal de correction du déphasage de la source laser ;
- le système comprend en outre un générateur de saut de phase configuré pour générer un échantillonnage adapté pour extraire une mesure de phase de frange d'interférence ;
- le système de traitement du signal est adapté pour générer signal de modulation de fréquence comprenant une composante linéaire de modulation et une composante non-linéaire de modulation en fonction du temps.

Selon un mode de réalisation particulier et avantageux, le capteur inertiel conventionnel comporte un sismomètre, un accéléromètre à base de MEMS, un gyromètre à base de MEMS, un gyromètre laser ou un gyromètre à fibre optique.

Selon l'invention, le système comprend un calculateur adapté pour recevoir une partie du premier signal hybride, le calculateur étant adapté pour générer un deuxième signal de mesure inertielle hybride en fonction du signal de mesure inertielle conventionnelle et de la partie du premier signal hybride issu du capteur inertiel interférométrique à atomes froids.

Selon l'invention, le capteur inertiel interférométrique à atomes froids est adapté pour générer un signal d'erreur par différence entre le signal de mesure inertielle par interférométrie atomique corrigé à une récurrence N du cycle de mesure et le signal de mesure inertielle par interférométrie atomique à une récurrence N-1, où N est un nombre entier naturel supérieur ou égal à deux, et le calculateur est adapté pour recevoir le signal d'erreur et une première partie du signal de mesure inertielle du capteur inertiel conventionnel, le calculateur étant adapté pour en déduire le deuxième signal de mesure inertielle hybride.

Avantageusement, le système de traitement du signal est adapté pour recevoir le deuxième signal de mesure inertielle hybride et le système de traitement du signal est adapté pour prélever une partie du deuxième signal de mesure inertielle hybride en remplacement du signal de mesure inertielle du capteur inertiel conventionnel et pour générer en temps réel un signal de modulation de fréquence non-linéaire en fonction de ladite partie du deuxième signal de mesure inertielle hybride.

Dans un mode de réalisation particulier, le système comprend en outre un coupleur configuré pour prélever en temps réel une autre partie du signal de mesure inertielle issu du capteur inertiel conventionnel, un filtre passe-bas adapté pour filtrer une composante continue de ladite autre partie du signal de mesure inertielle, un comparateur adapté pour comparer une composante continue de ladite autre partie du signal de mesure inertielle conventionnelle avec le signal de mesure inertielle par interférométrie atomique pour en déduire un signal d'erreur de biais du capteur inertiel conventionnel, et le calculateur étant adapté pour recevoir le signal d'erreur de biais et la première partie du signal du signal de mesure inertielle du capteur inertiel conventionnel, le calculateur étant adapté pour calculer en temps réel le deuxième signal de mesure inertielle hybride par différence entre la première partie du signal de mesure inertielle du capteur inertiel conventionnel et le signal d'erreur de biais.

Avantageusement, le système comprend en outre un coupleur configuré pour prélever en temps réel une autre partie du signal de mesure inertielle issu du capteur inertiel conventionnel, un filtre passe-bas adapté pour filtrer une composante continue de ladite autre partie du signal de mesure inertielle, un comparateur adapté pour comparer une composante continue de ladite autre partie du signal de mesure inertielle conventionnelle avec le signal de mesure inertielle par interférométrie atomique pour en déduire un signal d'erreur de biais du capteur inertiel conventionnel, et le calculateur étant adapté pour recevoir le signal d'erreur de biais et la première partie du signal du signal de mesure inertielle du capteur inertiel conventionnel, le calculateur étant adapté pour calculer en temps réel le deuxième signal de mesure inertielle hybride par différence entre la première partie du signal de mesure inertielle du capteur inertiel conventionnel et le signal d'erreur de biais.

Avantageusement, le calculateur est adapté pour transmettre une autre partie du deuxième signal de mesure inertielle hybride vers une sortie du système hybride de mesure inertielle.

Dans un mode de réalisation particulier et avantageux, le capteur inertiel conventionnel et le calculateur font partie d'une centrale de navigation inertielle comprenant trois accéléromètres, trois gyromètres et un ordinateur adapté pour générer un signal de navigation inertielle basé sur les mesures des trois accéléromètres et des trois gyromètres, la centrale de navigation inertielle étant adaptée pour recevoir ladite partie du premier signal hybride, la centrale de navigation inertielle étant adaptée pour générer un signal hybride de navigation inertielle en fonction du signal de navigation inertielle et de la partie du premier signal hybride issu du capteur inertiel interférométrique à atomes froids.

Avantageusement, la centrale de navigation inertielle est adaptée pour recevoir une partie du premier signal de mesure inertielle hybride et/ou du deuxième signal de mesure inertielle hybride et pour générer un signal de navigation inertielle hybride.

Selon un aspect particulier, le capteur inertiel interférométrique à atomes froids est configuré pour mesurer un signal d'accélération par interférométrie atomique, la boucle de contre-réaction comprend un microprocesseur adapté pour intégrer le signal d'accélération en fonction du temps pour en déduire une mesure de vitesse instantanée relative du cadre de référence inertiel par rapport à la bouffée d'atomes, et le signal de modulation de la fréquence centrale du laser comporte une rampe proportionnelle à la mesure de vitesse instantanée.

L'invention propose également un procédé de mesure inertielle hybride selon la revendication 13.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement le principe d'un interféromètre à atomes froids ;
- la figure 2 représente schématiquement un interféromètre à atomes froids en configuration de Mach-Zehnder ;
- la figure 3 représente un exemple de d'accéléromètre à atomes froids ;
- la figure 4 illustre des mesures d'accélération dans un interféromètre à atomes froids avec pré-compensation d'une accélération constante entre le référentiel du cadre et les atomes froids et une compensation temps réel de la phase;
- la figure 5 représente schématiquement un système de mesure hybride à double boucle de contre-réaction pour corriger en temps réel les mesures d'un capteur inertiel conventionnel au moyen du signal d'un capteur inertiel à atomes froids ;
- la figure 6 représente schématiquement une variante d'un système de mesure à boucle de contre-réaction pour corriger en temps réel les mesures d'un capteur inertiel à atomes froids au moyen du signal d'un capteur inertiel conventionnel ;
- la figure 7 représente schématiquement une autre variante d'un système de mesure à boucle de contre-réaction pour corriger en temps réel les mesures d'un capteur inertiel à atomes froids au moyen des signaux d'un capteur conventionnel ;
- la figure 8 représente schématiquement un autre exemple de système de mesure hybride à boucle de contre-réaction pour corriger en temps réel une erreur de biais dans un accéléromètre conventionnel au moyen des mesures issues d'un interféromètre inertiel à atomes froids et la compensation de l'effet Doppler aléatoire pour maintenir le contraste de l'interféromètre ;
- la figure 9 illustre des mesures d'accélération dans un interféromètre à atomes froids avec correction en temps réel des erreurs de biais dans un accéléromètre conventionnel au moyen des mesures issues d'un interféromètre inertiel à atomes froids et la compensation de l'effet Doppler aléatoire pour maintenir le contraste de l'interféromètre.

Dans le présent document, on entend par correction en temps réel une correction effectuée pendant une mesure interférométrique et non pas entre deux mesures interférométriques.

Dispositif

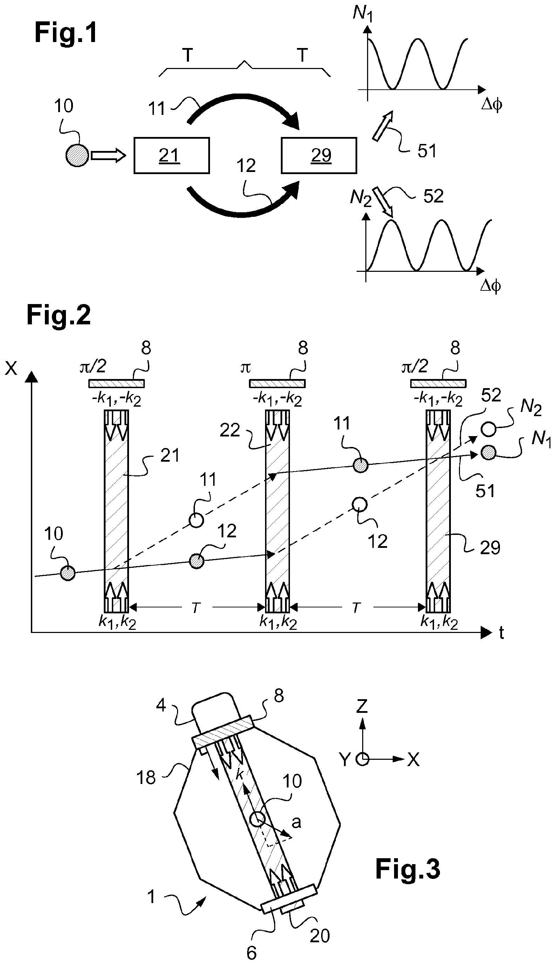

Sur la figure 1, on a représenté schématiquement le principe d'un interféromètre atomique. On considère un nuage d'atomes ou une bouffée d'atomes froids 10. Généralement, la bouffée d'atomes froids 10 est initialement immobilisée dans un piège à atomes, formé par exemple de trois paires de faisceaux laser contra-propageants disposés suivant trois axes orthogonaux. Les faisceaux laser sont éventuellement combinés avec un champ magnétique pour former un piège magnéto-optique (MOT pour magneto-optical trap). A un instant t=0, on ouvre le piège à atomes pour lancer ou faire tomber par gravité la bouffée d'atomes suivant une direction prédéterminée.

Une source laser émet un champ d'interrogation constitué d'une séquence d'impulsions lumineuses, de manière à interagir avec la structure fine des atomes par transfert de photons entre le champ d'interrogation et les atomes froids. La séquence d'impulsions laser produit une séparation cohérente de la bouffée d'atomes, au moins une redirection puis une recombinaison cohérente des faisceaux d'atomes.

Les impulsions lumineuses d'une séquence sont généralement espacées temporellement d'une durée T. On utilise en général une séquence de trois impulsions lumineuses appelée séquence « $\pi/2$- $\pi$ - $\pi/2$ ». Les impulsions «$\pi/2$» permettent de séparer ou recombiner les ondes de matière associées aux atomes. Les impulsions «$\pi$» permettent de défléchir les ondes de matière. D'autres séquences de plus de trois impulsions sont également utilisées, notamment une séquence de quatre impulsions lumineuses, « π/2- π - π - π/2 ». Dans tous les cas, une première impulsion lumineuse 21 interagit avec la bouffée d'atomes 10 issue de la source d'atomes de manière à séparer spatialement l'onde associée à chaque atome en une première onde d'atomes 11 se dirigeant suivant un premier trajet et, respectivement, une deuxième onde d'atomes 12 se dirigeant suivant un deuxième trajet. Au moins une deuxième impulsion lumineuse 22 interagit avec les deux ondes d'atomes 11, 12 séparées pour les rediriger. Enfin, une dernière impulsion lumineuse 29 recombine spatialement les deux ondes d'atomes 11, 12. L'aire définie par les trajets des deux ondes d'atomes 11, 12 entre la séparation et la recombinaison définit une aire d'interférométrie atomique. La sensibilité de l'interféromètre atomique est en général proportionnelle à l'aire délimitée par les deux trajets.

Un système de détection permet de mesurer le déphasage atomique accumulé entre les deux ondes d'atomes 11, 12 sur leurs trajets respectifs entre leur séparation et leur recombinaison. L'interféromètre atomique produit des amplitudes de probabilités du nombre d'atomes sur deux canaux de sortie 51, 52. On note $N_1$ la population ou le nombre d'atomes dans un premier état, et, respectivement, $N_2$ la population ou le nombre d'atomes dans un deuxième état. Le nombre d'atomes $N_1$, respectivement $N_2$, sur chaque canal de sortie 51, respectivement 52, oscille sinusoïdalement en fonction du déphasage total $\Delta\Phi$. On détecte en général des signaux complémentaires sur les deux canaux de sortie 51 et 52, comme illustré sur la figure 1.

Les interféromètres atomiques reposant sur l'interaction lumière-matière sont basés sur le principe suivant lequel, lorsqu'un atome absorbe ou émet un photon, il reçoit une quantité de mouvement hk. Une onde lumineuse résonante est utilisée pour exciter un atome par transfert de moment. Les interféromètres atomiques à impulsions lumineuses les plus fréquents sont basés sur des transitions à deux photons sélectives en vitesse, ou, autrement dit en différence de fréquence optique, la fréquence optique f et la vitesse v étant reliées par effet Doppler selon la formule : f=k.v. Un exemple courant de ce type de transition à deux photons correspond à une transition Raman, où deux faisceaux laser de fréquences optiques ω1 et ω2 sont ajustés au voisinage d'une transition optique dans l'atome considéré, tout étant suffisamment désaccordées pour que le niveau de population excitée soit faiblement peuplé. Le désaccord en fréquence (ω1 - ω2) est choisi pour être résonant avec une transition radio-fréquence entre deux niveaux fondamentaux hyperfins de l'atome considéré. Une transition multi-photons de Bragg ou à oscillations de Bloch peut aussi être utilisée pour construire un interféromètre atomique. Dans les derniers cas cités, au lieu de produire des transitions entre deux niveaux fondamentaux hyperfins, les atomes restent dans le même état fondamental et seule leur quantité de mouvement change.

Dans la suite de la description, nous prenons comme exemple le cas de transitions Raman pour des atomes de rubidium 87 ($^{87}$Rb). Toutefois, le principe s'applique également à d'autres transitions multi-photons, par exemple de Bragg ou de Bloch. Le même le principe s'applique également à d'autres atomes, par exemple de lithium, sodium, potassium ou césium.

La figure 2 montre un exemple schématique d'interféromètre atomique reposant sur une séquence de transferts de photons par interaction Raman à deux photons. On utilise ici deux faisceaux laser contra-propageant désaccordés en fréquence par rapport à la fréquence centrale $f_c$ de la source laser pour générer chaque interaction entre le champ d'interrogation et les atomes froids. Plus précisément, on effectue des transitions à deux photons entre un état fondamental |1, p0> et un état excité |2, p0+ħkeff> où $k_{eff}= k_1+k_2 \approx 2k_1$. La vitesse des atomes induit un décalage quadratique de l'énergie des états, qui sont séparés en fréquence de la somme de la séparation hyperfine, notée $\omega_{HF}$, entre ces deux états atomiques, du décalage Doppler, noté $\omega_D$, induit par la vitesse relative des atomes, et de la fréquence de recul, notée $\omega_{rec}$, induite par l'absorption à deux photons.

Une bouffée d'atomes 10 est initialement dans l'état atomique |1, p0>. Un dispositif de source laser génère une première paire d'impulsions contra-propageantes définies par un vecteur d'onde $k_1$ et respectivement $-k_2$. Plus précisément, on génère deux impulsions co-propageantes de vecteurs d'ondes $k_1$ et respectivement $k_2$. Un miroir 8 est disposé de manière à réfléchir les deux impulsions co-propageantes et former deux autres impulsions co-propageantes de vecteurs d'onde $-k_1$ et respectivement $-k_2$. Les fréquences optiques des impulsions laser sont sélectionnées en fonction des niveaux atomiques de la bouffée d'atomes de manière à interagir via une interaction à deux photons non-résonante. On utilise ici une première paire d'impulsions contra-propageantes constituée d'une impulsion de vecteur d'onde $k_1$ et respectivement d'une impulsion de vecteur d'onde $-k_2$. Cette première paire d'impulsions permet de séparer la bouffée d'atomes 10 en une première onde d'atomes 11 et une deuxième onde d'atomes 12. Au cours de cette interaction, l'atome diffuse un photon de chaque faisceau pour un transfert de moment égal à $\hbar(k_1-k_2)$. Le désaccord $\delta$ entre les deux photons qui détermine la condition de résonance pour la transition Raman est donné par :

$$\delta= \omega_{eff} -(\omega_{HF} + \omega_D + \omega_{rec})$$

où $\omega_{eff} = \omega_1 - \omega_2$ est la différence de fréquence optique entre les deux faisceaux lasers, $\omega_{HF}$ est la séparation entre les deux niveaux hyperfins de l'état fondamental ($\omega_{HF} \approx 2\pi$x 6.8 GHz pour l'atome $^{87}$Rb), $\omega_D$ représente le décalage Doppler du à la vitesse des atomes ($\omega_D \approx 2\pi$x 100 kHz) et $\omega_{rec}$ est la fréquence de recul (ou le décalage Doppler dû au recul d'un photon par un atome de masse M, $\omega_{rec} \approx 2\pi x$ 15 kHz). La force de la transition Raman est plus importante lorsque la fréquence optique centrale (notée $f_c$) du laser est ajustée de manière à ce que $\delta$=0. Dans ces conditions, la population des atomes oscille entre deux états internes en fonction du temps d'interaction avec les lasers. Ainsi, les impulsions Raman peuvent être ajustées pour séparer de manière cohérente ou réfléchir les ondes d'atomes. Quand les impulsions Raman sont contra-propagatives ($k_2 \approx -k_1$), cette transition s'accompagne d'un échange de moment approximativement égal au double d'une transition à un photon : $\hbar(k_2-k_1) \approx 2\hbar k_1$. Ceci produit une forte sensibilité à l'effet Doppler associé au mouvement relatif de l'atome.

Il existe différents types d'interféromètres à atomes : par exemple l'interféromètre atomique de type Mach-Zehnder à 3 impulsions lumineuses, l'interféromètre atomique Ramsey Bordé à 4 impulsions lumineuses, ou encore les interféromètres de Talbot Lau/ contrast/ Kapitza Dirac à N impulsions où N est un entier supérieur à 4.

La géométrie d'interféromètre atomique utilisée le plus souvent repose sur une séquence d'impulsions « $\pi/2$ - $\pi$ - $\pi/2$ ». On obtient ainsi un interféromètre atomique de Mach-Zehnder tel qu'illustré sur la figure 2. Ici, la première paire d'impulsions 21 contra-propageantes, notée « $\pi/2$ », excite un atome dans un état initial pour générer une première onde d'atomes 11 et une deuxième onde d'atomes 12. Pendant une durée T, les deux ondes d'atomes se propagent séparément. Une deuxième paire d'impulsion 22, notée « $\pi$ », redirige la première onde d'atomes 11 et la deuxième onde d'atomes 12. Après un autre intervalle de temps T, une dernière paire d'impulsion 29 contra-propageantes, notée « $\pi/2$ », recombine la première onde d'atomes 11 et la deuxième onde d'atomes 12 pour les faire interférer.

On mesure les interférences en détectant sur l'un des deux ports de sortie 51, respectivement 52, la population relative $N_1$, respectivement $N_2$, associée à l'un des deux états, c'est à dire correspondant à l'une des ondes d'atomes 11, respectivement 12. Ces populations $N_1$, respectivement $N_2$, sont en général mesurées par fluorescence résonante, plusieurs photons pouvant être diffusés par un seul atome.

L'interféromètre Raman à trois impulsions excite uniquement deux trajets. L'interférogramme suit une fonction sinusoïdale :

$$P_{1,2} = \frac{N_{1,2}}{N_1 + N_2} = \frac{1}{2}(1 \pm C\,cos\Delta\Phi_{tot})$$

où C représente le contraste des franges d'interférence et $\Delta\Phi_{tot}$ le déphasage interférométrique total accumulé.

Selon l'orientation de la source d'atomes et de l'interféromètre atomique, le déphasage interférométrique est sensible à une accélération et/ou une rotation suivant une direction déterminée. Les interféromètres atomiques trouvent des applications dans les senseurs inertiels de type gravimètre, gradiomètre, accéléromètre et gyromètre à atome froids. Une application particulièrement importante de l'interférométrie atomique concerne les accéléromètres à atomes froids (CAA pour cold atoms accelerometer).

La figure 3 illustre un exemple d'accéléromètre basé sur un interféromètre à atomes froids (CAA). Un nuage d'atomes froids 10 est formé dans une enceinte à vide 1. Un faisceau laser 20 est incident sur le nuage d'atomes 10 à travers une fenêtre 6 transparente. Le faisceau laser 20 est orienté suivant une direction définie par un vecteur ***k***. Un miroir 8 est disposé de manière à rétro-réfléchir le faisceau laser 20. Autrement dit, la normale 18 à la surface du miroir 8 est alignée suivant la direction du vecteur ***k***. Ainsi, l'accéléromètre à atomes froids effectue une mesure suivant le faisceau laser, parallèlement au vecteur ***k***. Un capteur inertiel classique 4, par exemple à base de MEMS, est fixé sur la face arrière du miroir 8. Le senseur classique est disposé de manière à être sensible suivant l'axe de mesure k du capteur interférométrique. De préférence, la mesure du senseur classique est effectuée suivant le même axe k. De façon alternative, il suffit de connaître l'angle entre l'axe de la mesure classique et l'axe de la mesure par interférométrie atomique. Le senseur classique et le capteur interférométrique peuvent être sensibles à des grandeurs différentes. Par exemple, le senseur classique mesure une rotation autour de l'axe du vecteur ***k*** et le capteur interférométrique mesure une accélération suivant l'axe du vecteur ***k***.

On note Z la direction verticale et X une direction horizontale d'un repère orthonormé (X, Y, Z). De manière générale, on considère une rotation de l'orientation de l'accéléromètre à atomes froids par rapport à l'axe vertical Z et un vecteur d'accélération ***a,*** qui est généralement hors d'axe par rapport au vecteur ***k***. Une telle rotation et une telle accélération constituent des sources d'erreurs non négligeables pour l'accéléromètre à atomes froids et/ou pour le capteur classique, qui ne dispose généralement pas d'une mesure de la rotation et de l'accélération suivant les trois directions du repère orthonormé (X, Y, Z). La présente divulgation vise à corriger ces erreurs.

Le déphasage total de l'accéléromètre à atomes froids s'exprime comme suit :

$$\Delta\Phi_{tot} = k_{eff}.aT^2 - \Phi_0$$

où $\Phi_0$ est une constante et $\alpha$ représente l'accélération relative des atomes par rapport au miroir de référence. La quantité

$\Phi_0$ peut être liée à la phase du laser par exemple. La quantité $\Phi_0$ est généralement utilisée comme paramètre de contrôle pour balayer les franges d'interférences, ce qui rend possible la mesure du déphasage dû à l'accélération **a.** L'équation ci-dessus montre la forte sensibilité des interféromètres atomiques aux effets inertiels, tels que la gravité. Comme ce déphasage est proportionnel à $T^2$, avec un temps d'interrogation de T≈10 ms et $k_{eff}$ de l'ordre de $1.6 \times 10^7$ rad/m à une longueur d'onde de 780 nm, l'accélération due à la gravité induit un déphasage de $1.6 \times 10^4$ rad. En supposant une incertitude de déphasage de l'ordre de 1 mrad par coup, la sensibilité de l'accéléromètre à la gravité est d'environ $6 \times 10^{-8}$ g.

Il est connu dans un gravimètre à atomes froids de moduler linéairement la différence de fréquence entre les faisceaux interférométriques à un taux $\alpha$ adapté pour annuler le décalage de fréquence induit par effet Doppler. Ainsi, les atomes restent en résonance avec la transition à deux photons lorsqu'ils tombent par gravité. Dans ce cas, la différence de fréquence s'écrit $\omega_{eff}(t) = \delta_0 + \alpha(t)$

Le déphasage total se réduit à :

$$\Delta\Phi_{tot} = (\boldsymbol{k_{eff}} \cdot \boldsymbol{g} - \alpha)T^2 \qquad (9)$$

Cette relation permet d'effectuer la mesure de la gravité **g** suivant le procédé suivant. On cherche la valeur de $\alpha = \boldsymbol{k_{eff}} \boldsymbol{g}$ pour laquelle le déphasage total de l'interféromètre s'annule :

$$\Delta\Phi_{tot} = 0.$$

Puis on en déduit $g = \alpha / k_{eff}$

On suppose ici que l'angle entre le faisceau laser incident et le faisceau laser réfléchi est nul. Comme le signal de sortie est sinusoïdal, on obtient un minimum (ou respectivement un maximum) sur les franges à chaque déphasage de $2\pi$. Par conséquent, la détermination du coefficient linéaire $\alpha$ de modulation de fréquence qui annule la gravité pour une certaine durée d'interrogation T est ambigüe modulo $2\pi$.

Toutefois, l'équation (9) est indépendante de la durée d'interrogation T si et seulement si $g=\alpha/k_{eff}$. Il est possible de déterminer la frange centrale en comparant deux interférogrammes obtenus pour deux valeurs de durées d'interrogation T distinctes. La frange centrale a en effet une phase absolue de référence égale à $\alpha = \boldsymbol{k_{eff}} \boldsymbol{g}$ inchangée quelle que soit la valeur de T. Une fois la frange centrale identifiée, de nouvelles mesures de gravité peuvent être obtenues rapidement, une fois par cycle de CAA, par exemple toutes les 0,2 à 1s. Ceci est obtenu en inversant la probabilité $P_{1,2}$ dans le domaine de réciprocité de la fonction cosinus pour obtenir le déphasage total :

$$\Delta\Phi_{tot} = \cos^{-1}\big(\pm(2P_{1,2} - 1)/C\big)$$

On en déduit

$$g = \frac{\alpha}{k_{eff}} + \frac{\Delta\Phi_{tot}}{k_{eff}T^2}$$

Le premier terme de cette équation correspond à la position de la frange centrale (c'est-à-dire la modulation linéaire de fréquence qui annule l'effet Doppler induit par gravité sur les atomes) et le second terme correspond à une petite correction d'accélération qui prend en compte des déphasages incontrôlés (par exemple des vibrations du miroir 8 définissant un repère de référence) d'au plus $\pi/k_{eff}T^2$. Par exemple, si T=10ms et $k_{eff}$=$1.6 \times 10^7$ radls la correction d'accélération maximale est de 200 μ**g**. Ceci implique aussi que la valeur de $\alpha$ soit déterminée avec une précision relative meilleure que $10^{-4}$. Par exemple, pour des atomes de rubidium 87, $\delta\alpha <<2\pi.2,5$ kHz/s pour $\alpha \approx 2\pi \times 25$ MHz/s est requis pour annuler la gravité **g** avec T=10 ms.

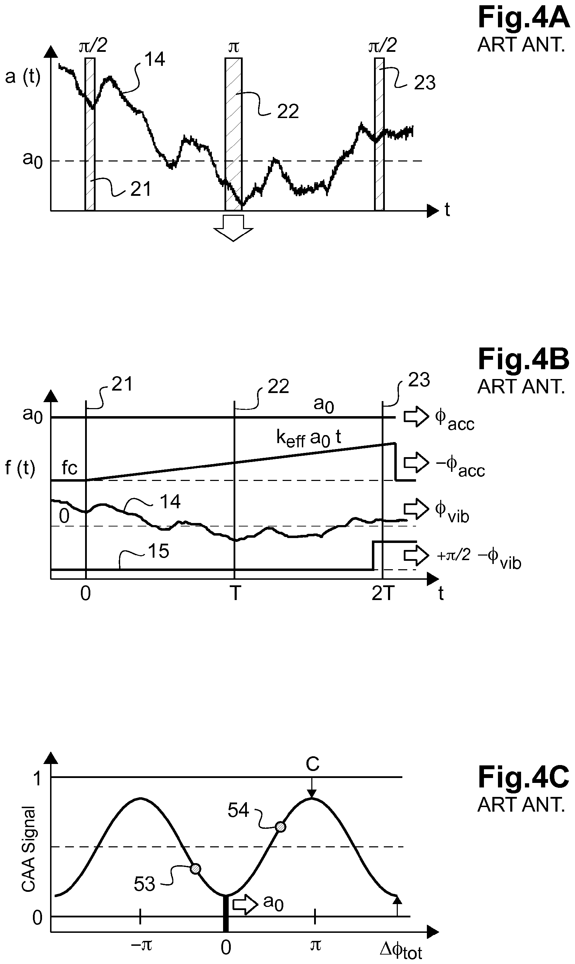

La figure 4 illustre un exemple de mesure d'accélération selon l'art antérieur. Sur la figure 4A, on a représenté un signal a(t) enregistré en fonction du temps au moyen d'un accéléromètre 4 conventionnel fixé sur le miroir 8 rétro-réfléchissant pendant une séquence d'impulsions 21, 22, 23 ou de manière équivalente π/2-π-π/2. Sur les figures 4A et 4B, on a représenté une accélération constante $\boldsymbol{a_0}$ s'appliquant aux atomes froids. Sur la figure 4B, on a aussi représenté une modulation linéaire de fréquence f(t) appliquée à la différence de fréquence entre faisceaux laser incidents pour l'interaction à deux photons, cette modulation linéaire de fréquence f(t) étant ajustée pour annuler l'effet Doppler induit par l'accélération constante $a_0$ sur les atomes froids. Sur les figures 4A et 4B, la courbe 14 retrace les mesures de vibrations sur le miroir 8 obtenues au moyen de l'accéléromètre conventionnel 4. La courbe 15 représente une phase de contrôle appliquée pour générer un saut de phase juste avant une séquence d'impulsions, de manière à ce que l'interféromètre fonctionne au voisinage de la demi-frange, dans le domaine de linéarité du signal.

Sur la figure 4C, on observe deux mesures 53, 54 du signal de l'interféromètre atomique au voisinage du déphasage total de $\pm\pi/2$. Ces mesures 53, 54 permettent une évaluation de $\mathbf{a_0}$.

Toutefois, on constate une perte de contraste C. Cette perte de contraste entraîne une perte de sensibilité de l'interféromètre atomique. Si le contraste C passe en dessous d'un seuil de contraste, l'interféromètre ne fonctionne plus

Il découle de la présente divulgation que cette perte de contraste est due au décalage Doppler induit par les vibrations qui ne sont pas compensées pendant chaque impulsion laser.

Une première solution consiste à isoler le cadre supportant le miroir des vibrations. Toutefois, cette solution ne s'applique pas dans les applications de navigation inertielle, où les vibrations font partie du mouvement du véhicule.

Dans le cadre de la présente divulgation, une autre solution est basée sur une mesure temps réel des vibrations suivant la même direction que le CAA au moyen d'un capteur classique 4 de type accéléromètre ou sismomètre et sur une évaluation du déphasage associé à ces vibrations en utilisant la sensibilité de l'interféromètre atomique au mouvement du cadre de référence. Par exemple, un accéléromètre classique mesure l'accélération en temps réel. Dans un autre exemple, un sismomètre mesure la vitesse. Le cadre de référence est défini par un repère orthonormé lié à l'interféromètre atomique. Par exemple, le repère orthonormé du cadre de référence comprend la normale 18 à la surface du miroir et deux axes transverses à cette normale 18.

Le capteur classique est orienté de manière à être sensible suivant l'axe de mesure du CAA. On suppose que l'angle entre l'axe de mesure du capteur classique et l'ace de mesure du CAA est connu. De préférence, ces deux axes sont confondus.

On définit la sensibilité d'une géométrie d'interféromètre atomique aux effets physiques induisant un déphasage par une fonction de sensibilité w(t). Cette sensibilité peut être définie en termes de vitesse $w_v(t)$ ou d'accélération $w_a(t)$ pour des vibrations du cadre de référence. Le déphasage associé peut être calculé par intégration en fonction du temps :

$$\Phi(t) = \int_0^{2T} w_v(t)v_{vib}(t)dt = \int_0^{2T} w_a(t)a_{vib}(t)dt$$

Où $v_{vib}(t) = \int a_{vib}(t)'dt'$ est une vitesse induite par vibration du cadre de référence à l'instant t. On suppose ici que $\mathbf{a_{vib}}$ n'inclue pas l'accélération constante $\mathbf{a_0}$ due par exemple à une composante de gravité.

Selon un mode de réalisation particulier, on intègre les signaux du capteur inertiel classique 4 en temps réel pour en déduire à chaque instant t une mesure de la vitesse induite par les vibrations du cadre de référence.

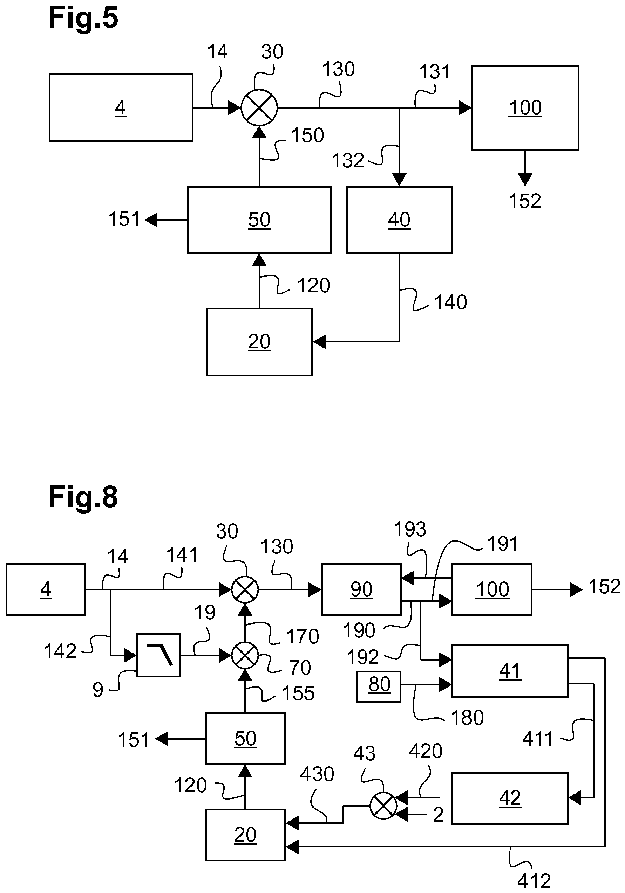

La figure 5 représente schématiquement un système de navigation inertiel hybride basé sur un capteur inertiel conventionnel 4 et un capteur inertiel à atomes froids 50. Une source laser 20 génère un champ d'interrogation du capteur inertiel à atomes froids 50. Le champ d'interrogation comprend une séquence d'impulsions laser. Le système de navigation inertiel comporte en outre une boucle de contre-réaction en temps réel comprenant un système de traitement du signal 40 qui applique un signal de modulation à la source laser 20. Enfin, le système de navigation inertiel comporte une deuxième boucle de contre-réaction en temps réel comprenant un dispositif 30 de correction du signal provenant du capteur inertiel conventionnel 4.

Le capteur inertiel à atomes froids 50 peut être n'importe quel type d'interféromètre atomique. Le capteur inertiel à atomes froids 50 est par exemple un accéléromètre, un gravimètre, un gyroscope, un gradiomètre, un magnétomètre, utilisant une ou plusieurs sources d'atomes (tels que rubidium, potassium...). Le capteur inertiel à atomes froids 50 est ici supposé être plus précis que le capteur inertiel conventionnel 4.

Lors d'une première récurrence, une partie 132 du signal brut 14 du capteur inertiel conventionnel 4 est transmise au système de traitement du signal 40. Le système de traitement du signal 40 génère un signal de modulation 140 qui intègre les éléments nécessaires pour compenser les effets d'un mouvement de rotation, d'accélérations et/ou de vibrations à basse fréquence du cadre de référence utilisé par le capteur inertiel à atomes froids 50.

Ce signal de modulation 140 est transmis à la source laser 20 qui génère le champ d'interrogation du capteur inertiel à atomes froids 50. Le signal de modulation 140 génère en temps réel une modulation 120 de la fréquence centrale de la source laser. Le champ d'interrogation est ainsi modulé en temps réel en fonction des mesures du capteur inertiel conventionnel 4.

Dans un mode de réalisation particulier et avantageux, le capteur inertiel à atomes froids 50 produit un signal d'erreur 150 qui est utilisé pour corriger la dérive de biais du capteur inertiel conventionnel 4 dans la deuxième boucle de contre-réaction.

A la récurrence suivante, un calculateur 30 corrige une nouvelle mesure 14 provenant du capteur inertiel conventionnel 4 en fonction du signal d'erreur 150. Le calculateur 30 fournit donc un signal corrigé 130 qui constitue un deuxième signal de mesure inertielle hybride. Une partie 131 du signal corrigé 130 est transmise pour utilisation à une centrale de navigation inertielle 100. La centrale de navigation inertielle 100 comprend en général trois gyroscopes, trois accéléromètres et un ordinateur. Ce signal corrigé 130 est beaucoup plus précis que le signal brut 14 issu du capteur inertiel conventionnel 4. Une autre partie 132 du signal corrigé 130 est transmise au système de traitement du signal 40 pour assurer la mise à jour de la boucle de contre-réaction en temps réel à la récurrence suivante.

De cette manière, le signal brut 14 issu du capteur inertiel conventionnel 4 est corrigé périodiquement en utilisant le signal de sortie du capteur inertiel à atomes froids 50. On obtient ainsi un signal corrigé 130 du capteur inertiel conventionnel 4.

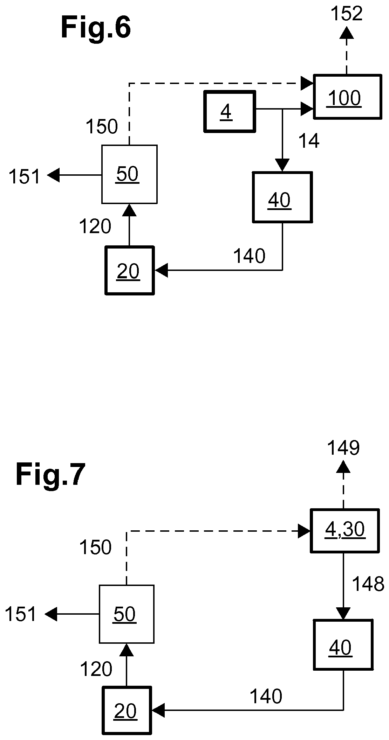

La figure 6 illustre une variante comprenant une centrale de navigation inertielle 100, un capteur inertiel à atomes froids 50 et un capteur inertiel conventionnel 4 fixé au référentiel du capteur inertiel à atomes froids 50. Les mêmes signes de référence désignent les mêmes éléments que sur la figure 5. Dans ce mode de réalisation, le capteur inertiel conventionnel 4 génère un signal brut 14. Une partie du signal brut 14 est transmise à la centrale de navigation inertielle 100 et une autre partie du signal brut 14 est transmise au système de traitement du signal 40 qui génère un signal de modulation 140. Le signal de modulation 140 est appliqué à la source laser 20 pour moduler la fréquence centrale de la source laser. Ainsi, on contrôle en temps réel une différence de fréquence de la source laser 20. De cette manière, le capteur inertiel à atomes froids 50 génère un premier signal hybridé 151 de mesure inertielle par interférométrie atomique qui est corrigé en temps réel des mouvements mesurés par le capteur inertiel conventionnel 4. Cette correction permet d'assurer le fonctionnement du capteur inertiel à atomes froids 50 malgré des mouvements aléatoires du référentiel.

De façon optionnelle illustrée en pointillés sur la figure 6, le capteur inertiel à atomes froids 50 produit un signal d'erreur 150 qui est utilisé pour appliquer une rétroaction directement sur le système de navigation inertielle 100, sans correction du capteur inertiel conventionnel 4. Le signal d'erreur 150 est constitué d'une partie du premier signal hybridé 151. De cette manière, le capteur inertiel à atomes froids 50 et capteur inertiel conventionnel 4 se corrigent mutuellement.

La figure 7 illustre une autre variante comprenant un capteur inertiel conventionnel 4, un calculateur 30 et un capteur inertiel à atomes froids 50. Dans cette variante, le capteur inertiel conventionnel 4 est fixé au référentiel du capteur inertiel à atomes froids 50. Le capteur inertiel conventionnel 4 peut être analogue à celui décrit en lien avec les modes de réalisation illustrés en figures 5 et 6.

Dans un exemple de réalisation, le capteur inertiel conventionnel 4 fait partie d'une centrale de navigation inertielle fournissant des mesures inertielles conventionnelles dans le référentiel du capteur inertiel à atomes froids 50. Par exemple, la centrale de navigation inertielle fournit des mesures d'accélération et de rotation en 3 dimensions.

Dans le mode de réalisation de la figure 7, le capteur inertiel conventionnel 4 et le calculateur 30 génèrent un signal de mesure inertielle 148, par exemple de mesure de rotation et/ou d'accélération suivant un axe ou plusieurs axes déterminés. Comme indiqué plus haut, le signal de mesure inertielle 148 est par exemple issu de capteurs conventionnels d'une centrale de navigation inertielle, par exemple à base de composants MEMS. Ce signal de mesure inertielle 148 est transmis au système de traitement du signal 40 qui génère un signal de modulation 140. Le signal de modulation 140 est appliqué à la source laser 20 pour moduler la fréquence centrale de la source laser. Ainsi, on contrôle en temps réel une différence de fréquence de la source laser 20. De cette manière, le capteur inertiel à atomes froids 50 génère un premier signal hybridé 151 de mesure inertielle par interférométrie atomique qui est corrigé en temps réel des mouvements mesurés par le capteur inertiel conventionnel 4 et le calculateur 30. Cette correction permet d'assurer le fonctionnement du capteur inertiel à atomes froids 50 quelles que soient les variations aléatoires d'orientation et/ou de position du référentiel.

Selon l'invention illustrée en pointillés sur la figure 7, le capteur inertiel à atomes froids 50 produit un signal d'erreur 150. Le signal d'erreur 150 est constitué d'une partie du premier signal hybride 151 .Le signal d'erreur 150 est utilisé pour appliquer une rétro-action directement sur le calculateur 30 pour corriger finement les mesures du capteur inertiel conventionnel 4, et éventuellement du système de navigation inertielle 100 intégrant ce capteur 4, en fonction de la mesure du capteur inertiel à atomes froids 50. Ainsi, le capteur inertiel à atomes froids 50 et le capteur inertiel conventionnel 4 se corrigent mutuellement.

La figure 8 représente un exemple d'implémentation selon un autre mode de réalisation. Dans cet exemple, le capteur inertiel conventionnel 4 est un accéléromètre, par exemple à base de MEMS. Le capteur inertiel à atomes froids 50 est un accéléromètre à atomes froids qui mesure les mouvements du cadre de référence.

L'accéléromètre conventionnel 4 produit en continu une mesure d'accélération 14, notée $a_{cl}(t)$. Cette mesure d'accélération 14 comporte une composante d'accélération $a_0$ qui correspond à l'accélération du système que l'on souhaite mesurer, une autre composante d'accélération, notée $a_{vib}(t)$, qui est associée aux vibrations de l'appareil et une composante parasite de biais b(t), qui varie lentement en fonction du temps. D'où l'équation :

$$a_{cl(t)} = a_0 + a_{vib}(t) + b(t)$$

La centrale de navigation inertielle comporte un ordinateur 90. L'appareil comporte en outre une horloge 80, un microprocesseur 41, un convertisseur 42 et un modulateur de fréquence optique 43.

Une partie 142 de la mesure brute 14 issue de l'accéléromètre conventionnel 4 est transmise à un filtre 9 basse fréquence. Le filtre 9 basse fréquence extrait une mesure 19 de la composante continue d'accélération $a_{DC}$. Un calculateur 70 soustrait cette composante continue d'accélération $a_{DC}$ de la mesure d'accélération 155 produite par l'accéléromètre à atomes froids 50. Le calculateur 70 produit ainsi un signal d'erreur 170. Un autre calculateur 30 calcule la somme de l'autre partie 141 de la mesure brute 14 et du signal d'erreur 170. Le calculateur 30 produit ainsi un signal d'accélération 130 qui est corrigé la dérive de biais de l'accéléromètre conventionnel 4. On note que le signal d'erreur 170 est mis à jour à chaque cycle de mesure de l'accéléromètre à atomes froids 50.

Le signal d'accélération 130 corrigé la dérive de biais est transmis à l'ordinateur 90. L'ordinateur 90 corrige la mesure d'accélération des effets induits par des mouvements, par exemple de rotation et génère une mesure d'accélération $a_i(t)$, notée aussi 190. Une partie 191 de la mesure d'accélération $a_i(t)$ peut être transmise à un système de navigation inertielle 100 par exemple.

De façon avantageuse, l'ordinateur de la centrale de navigation inertielle 100 peut transmettre un flux de donnée 193 à l'ordinateur 90. Ce flux de données 193 comprend par exemple des mesures de rotation effectuées par le(s) gyromètre(s) de la centrale de navigation inertielle 100.

Une autre partie 192 de la mesure d'accélération $a_i(t)$ est transmise au microprocesseur 41. Le microprocesseur 41 remplit deux fonctions. D'une part, le microprocesseur 41 intègre la mesure d'accélération $a_i(t)$ en fonction du temps pour en déduire une mesure de vitesse relative 411 entre le cadre de référence et les atomes, qui sont par exemple en chute libre. L'horloge 80 déclenche un signal 180 de début d'un cycle de mesure et d'intégration. D'autre part, le microprocesseur 41 calcule une phase de contrôle 412 qui assure que l'interféromètre fonctionne toujours au voisinage d'une demi-frange, où la sensibilité est maximum. La mesure de vitesse relative 411 est transmise à un microprocesseur 42 comprenant par exemple une combinaison de convertisseur numérique-analogique ADC et/ou DDS. Le microprocesseur 42 convertit la mesure de vitesse relative 411 en un signal radio-fréquence 420 qui correspond à la fréquence Doppler $f_D$ du cadre de référence via la relation : $f_D(t)=k_{eff} \, v_i(t) \, / \, 2\pi$

Un opérateur 43 calcule la somme du signal radio-fréquence 420 Doppler et de la fréquence centrale 2 de la source laser 20. Par exemple, on choisit $f_c \approx 6.8$ GHz pour la transition Raman de l'atome de rubidium 87. On obtient ainsi un autre signal radio-fréquence 430 qui est transmis à la source laser 20 de manière à ajuster la fréquence centrale de cette source laser 20.

La phase de contrôle 412 est aussi transmise à la source laser 20 de manière à déclencher un saut de phase juste avant la dernière impulsion à 2T.

La source laser 20 génère une séquence d'impulsions 120, par exemple $\pi/2$- $\pi$- $\pi/2$, en direction de l'accéléromètre à atomes froids 50. Ainsi, pendant chaque impulsion, la différence de fréquence entre les faisceaux laser contra-propageants varie en temps réel suivant la composante continue d'accélération des atomes induite par la gravité et suivant les accélérations modulées en fréquence dues aux vibrations et aux mouvements de l'appareil. Cette boucle de contre-réaction en temps réel assure que le déphasage total induit par les accélérations reste au voisinage de zéro et que le contraste des franges n'est pas diminué par décalage Doppler de la fréquence $f_c$ de la source laser. Pendant la dernière paire d'impulsions $\pi/2$, un saut de phase contrôlé de $\pm\pi/2$ est appliqué pour contrôler la position de la frange centrale, et assurer la sensibilité de la mesure d'accélération.

Pendant le même cycle de mesure, le comparateur 70 compare la mesure d'accélération 155 issue de l'accéléromètre à atomes froids 50 et la mesure 19 de la composante continue d'accélération $a_{DC}$ issue de l'accéléromètre conventionnel 4. Le comparateur 70 en déduit un signal d'erreur 170 pour le cycle de mesure suivant. Ainsi, le procédé d'asservissement basé sur une boucle de contre-réaction est terminé.

Pendant un cycle [0 ; 2T], on acquiert une mesure d'une composante continue composante de la mesure d'accélération 14. On calcule la moyenne de la mesure d'accélération 14 sur l'intervalle de temps [0 ; 2T]. La sortie de l'accéléromètre à atomes froids 50 fournit une mesure précise de $\mathbf{a_0}$ à chaque cycle.

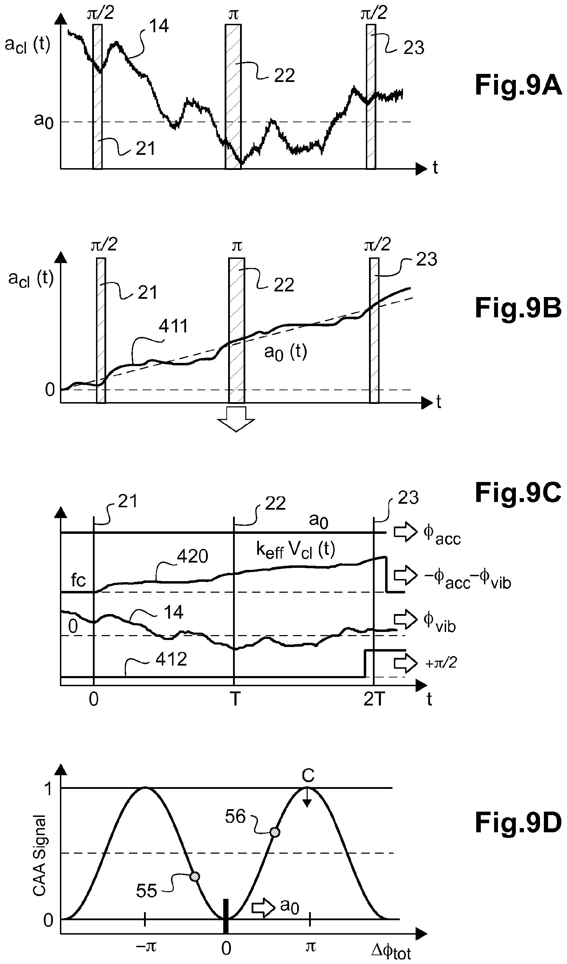

La figure 9 illustre un exemple de mesure d'accélération selon un exemple de réalisation basé sur un système tel que décrit en lien avec la figure 5 ou la figure 8.

Sur la figure 9A, on a représenté un signal $a_{cl}(t)$ enregistré en fonction du temps au moyen d'un accéléromètre 4 conventionnel fixé sur le miroir 8 rétro-réfléchissant pendant une séquence d'impulsions 21, 22, 23 ou de manière équivalente $\pi/2$-$\pi$-$\pi/2$. Le signal brut représenté sur la figure 9A est analogue au signal de la figure 4A. Sur les figures 9A, 9B et 9C, on a représenté une accélération constante $a_0$ s'appliquant aux atomes froids. Le signal $a_{cl}(t)$ enregistre les vibrations du miroir 8 de référence continûment et en temps réel pendant les impulsions laser de l'interféromètre à atomes froids.

Sur la figure 9B, on a aussi représenté en fonction du temps une intégrale du signal d'accélération fourni par l'accéléromètre classique. Le signal 411 de la figure 9B correspond à la vitesse relative $v_{cl}(t)$ entre les atomes et le miroir 8 de référence. Le signal de la figure 9B inclue les mouvements relatifs du cadre de référence induits par des vibrations.

Sur la figure 9C, le signal 411 de la vitesse relative $v_{cl}(t)$ est converti en une rampe de fréquence non linéaire 420. La rampe de fréquence non linéaire 420 est ajoutée à la fréquence $f_c$ pour former un signal de fréquence 430 modulé en temps réel. La rampe de fréquence non linéaire permet d'annuler automatiquement les déphasages induits par des accélérations et/ou des vibrations du cadre de référence, autrement dit du miroir 8, et compense l'effet Doppler.

Un saut de phase est appliqué juste avant la dernière impulsion 23 d'une séquence d'impulsions, de manière à ce que l'interféromètre fonctionne au voisinage de la demi-frange, dans le domaine de linéarité du signal.

Sur la figure 9D, on observe deux mesures 55, 56 du signal provenant de l'interféromètre atomique au voisinage du déphasage total de $\pm\pi/2$. Ces mesures 55, 56 permettent une évaluation précise de l'accélération $a_0$.

En effet, aucune perte de contraste n'est constatée du fait de la suppression en temps réel de l'effet des vibrations.

Nous avons décrit un mode de réalisation basé sur l'hybridation d'un capteur d'accélération classique et d'un accéléromètre basé sur un interféromètre à atomes froids (CAA).

Toutefois, le principe de système hybride à boucle de contre-réaction s'applique également à d'autres types de capteurs inertiels.

Dans un autre exemple, on utilise le capteur inertiel classique est un gyromètre adapté pour mesurer une rotation du système autour d'un axe de rotation et des variations en rotation. Dans ce cas, l'interféromètre à atomes froids est avantageusement configuré pour mesurer une rotation, de préférence autour du même axe de rotation.

De façon particulièrement avantageuse, le capteur inertiel classique est un capteur adapté pour mesurer les accélérations et les rotations suivant 6 degrés de liberté et, de manière analogue, le système interférométrique à atomes froids est configuré pour mesurer les accélérations et les rotations suivant les 6 degrés de liberté. On dispose ainsi d'un système inertiel complet, corrigé pour chacun des 6 degrés de liberté.

Un tel système hybride fournit des mesures de position et d'orientation sur une gamme de mesure très étendue, ces mesures étant corrigées en temps réel des mouvements du référentiel du système inertiel.

## Revendications

1. Système hybride de mesure inertielle comprenant :

    - un capteur inertiel interférométrique à atomes froids (50) comprenant une source laser (20) adaptée pour générer une séquence d'impulsions laser (21, 22, 23, 29) en direction d'une bouffée d'atomes froids (10) et un système de détection d'un signal de mesure inertielle par interférométrie atomique relatif à un cadre de référence inertiel, et
    - un capteur inertiel conventionnel (4, 100) fixé au cadre de référence inertiel du capteur inertiel interférométrique à atomes froids (50), le capteur inertiel conventionnel (4, 100) étant adapté pour fournir un signal de mesure inertielle conventionnelle (14, 148) du cadre de référence inertiel,
    - le capteur inertiel conventionnel (4, 100) est adapté pour fournir le signal de mesure inertielle conventionnelle (14, 148) enregistré en fonction du temps pendant ladite séquence d'impulsions laser,
    et le système hybride comporte un système électronique à boucle de contre-réaction comprenant:

        - un système de traitement du signal (40, 41, 42) adapté pour recevoir le signal de mesure inertielle (14, 141, 148) du capteur inertiel conventionnel (4, 100), le système de traitement du signal (40, 41, 42) étant adapté pour générer en temps réel un signal de modulation de fréquence (140, 420) non-linéaire en fonction du signal de mesure inertielle conventionnelle (14, 141, 148) enregistré en fonction du temps pendant ladite séquence d'impulsions laser,
        - chaque impulsion laser de la séquence d'impulsions laser (21, 22, 23, 29) ayant un désaccord en fréquence optique prédéterminé par rapport à une fréquence optique centrale (2) de la source laser (20), le système électronique à boucle de contre-réaction étant configuré pour moduler en temps réel la fréquence optique centrale du laser (20) en fonction du signal de modulation (140, 420), de manière à moduler en temps réel ladite séquence d'impulsions laser (21, 22, 23, 29) et à ce que le capteur inertiel interférométrique à atomes froids (50) génère un premier signal hybride (151) de mesure inertielle par interférométrie atomique corrigé des mouvements relatifs du cadre de référence inertiel par rapport à la bouffée d'atomes froids (10) lors d'un cycle de mesure,

        **caractérisé en ce que** le système hybride de mesure inertielle comprend un calculateur (30) adapté pour recevoir une partie (150) du premier signal hybride (151), le calculateur (30) étant adapté pour générer un deuxième signal de mesure inertielle hybride (130, 132, 148, 149) en fonction du signal de mesure inertielle conventionnelle (14) et de la partie (150) du premier signal hybride issu du capteur inertiel interférométrique à atomes froids (50), dans lequel le capteur inertiel interférométrique à atomes froids (50) est adapté pour générer un signal d'erreur (150, 170) par différence entre le signal (150, 155) de mesure inertielle par interférométrie atomique corrigé à une récurrence N du cycle de mesure et le signal (150, 155) de mesure inertielle par interférométrie atomique à une récurrence N-1, où N est un nombre entier naturel supérieur ou égal à deux, et dans lequel le calculateur (30) est adapté pour recevoir le signal d'erreur (150, 170) et une première partie du signal de mesure inertielle (14, 141) du capteur inertiel conventionnel (4), le calculateur (30) étant adapté pour en déduire le deuxième signal de mesure inertielle hybride (130, 132, 148, 149).

2.  Système hybride selon la revendication 1 dans lequel le cadre de référence inertiel comporte un composant optique réfléchissant (8) disposé de manière à rétro-réfléchir la séquence d'impulsions laser (21, 22, 23, 29) et à générer une séquence d'impulsions laser contra-propageantes en direction de la bouffée d'atomes froids (10), le capteur inertiel conventionnel (4, 100) étant fixé au composant optique réfléchissant (8) du capteur inertiel interférométrique à atomes froids (50).

3.  Système hybride selon l'une des revendications 1 à 2 dans lequel le système de traitement du signal (40, 41, 42) est adapté pour générer en outre un signal de correction du déphasage (412) de la source laser (20).

4.  Système hybride selon l'une des revendications 1 à 3 comprenant en outre un générateur de saut de phase configuré pour générer un échantillonnage adapté pour extraire une mesure de phase de frange d'interférence.

5.  Système hybride selon l'une des revendications 1 à 4 dans lequel le système de traitement du signal (40, 41, 42) est adapté pour générer signal de modulation de fréquence comprenant une composante linéaire de modulation et une composante non-linéaire de modulation en fonction du temps.

6.  Système hybride selon l'une des revendications 1 à 5 dans lequel le capteur inertiel conventionnel (4) comporte un sismomètre, un accéléromètre à base de MEMS, un gyromètre à base de MEMS, un gyromètre laser ou un gyromètre à fibre optique.

7.  Système hybride de mesure inertielle selon la revendication 1 dans lequel le système de traitement du signal (40, 41, 42) est adapté pour recevoir le deuxième signal de mesure inertielle hybride et dans lequel le système de traitement du signal (40, 41, 42) est adapté pour prélever une partie du deuxième signal de mesure inertielle hybride (130, 132, 148, 192) en remplacement du signal de mesure inertielle (14, 141, 148) du capteur inertiel conventionnel (4, 100) et pour générer en temps réel un signal de modulation de fréquence non-linéaire (140, 420) en fonction de ladite partie du deuxième signal de mesure inertielle hybride (130, 132, 148, 192).

8.  Système hybride selon l'une des revendications 1 à 7 comprenant en outre un coupleur configuré pour prélever en temps réel une autre partie du signal de mesure inertielle (142) issu du capteur inertiel conventionnel (4), un filtre (9) passe-bas adapté pour filtrer une composante continue de ladite autre partie du signal de mesure inertielle (142), un comparateur (70) adapté pour comparer une composante continue (19) de ladite autre partie du signal de mesure inertielle conventionnelle avec le signal de mesure inertielle (155) par interférométrie atomique pour en déduire un signal d'erreur de biais (170) du capteur inertiel conventionnel, et le calculateur (30) étant adapté pour recevoir le signal d'erreur de biais (170) et la première partie du signal de mesure inertielle (14, 141) du capteur inertiel conventionnel, le calculateur (30) étant adapté pour calculer en temps réel le deuxième signal de mesure inertielle hybride (130) par différence entre la première partie du signal de mesure inertielle (14, 141) du capteur inertiel conventionnel (4) et le signal d'erreur de biais (170).

9.  Système hybride de mesure inertielle selon l'une des revendication 1 à 8 dans lequel le calculateur (30) est adapté pour transmettre une autre partie du deuxième signal de mesure inertielle hybride (131, 191) vers une sortie du système hybride de mesure inertielle.

10. Système hybride de mesure inertielle selon l'une des revendications 1 à 9 dans lequel le capteur inertiel conventionnel (4, 100) et le calculateur (30) font partie d'une centrale de navigation inertielle (100) comprenant trois accéléromètres, trois gyromètres et un ordinateur adapté pour générer un signal de navigation inertielle basé sur les mesures des trois accéléromètres et des trois gyromètres, la centrale de navigation inertielle étant adaptée pour recevoir ladite partie (150) du premier signal hybride (151), la centrale de navigation inertielle (100) étant adaptée pour générer un signal hybride de navigation inertielle (152) en fonction du signal de navigation inertielle et de la partie (150) du premier signal hybride issu du capteur inertiel interférométrique à atomes froids (50).

11. Système hybride de mesure inertielle selon la revendication 10 dans lequel la centrale de navigation inertielle est adaptée pour recevoir une partie (150) du premier signal de mesure inertielle hybride (151) et/ou du deuxième signal de mesure inertielle hybride (131, 191) et pour générer un signal de navigation inertielle hybride.

**12.** Système hybride selon l'une des revendications 1 à 11 dans lequel le capteur inertiel interférométrique à atomes froids (50) est configuré pour mesurer un signal d'accélération par interférométrie atomique, la boucle de contre-réaction comprenant un microprocesseur (41) adapté pour intégrer le signal d'accélération en fonction du temps pour en déduire une mesure de vitesse instantanée relative du cadre de référence inertiel par rapport à la bouffée d'atomes (10), et en ce que le signal de modulation (420) de la fréquence centrale du laser comporte une rampe proportionnelle à la mesure de vitesse instantanée.

**13.** Procédé de mesure inertielle hybride comprenant les étapes suivantes :

   a. Génération d'une séquence d'impulsions laser (21, 22, 23, 29) en direction d'une bouffée d'atomes froids (10), chaque impulsion laser de la séquence d'impulsions laser (21, 22, 23, 29) ayant un désaccord en fréquence optique prédéterminé par rapport à une fréquence optique centrale (2) de la source laser (20), et détection d'un signal de mesure inertielle par interférométrie atomique relatif à un cadre de référence inertiel ;
   b. Détection d'un signal de mesure inertielle conventionnelle (14, 148) du cadre de référence inertiel enregistré en fonction du temps pendant la séquence d'impulsions laser ;
   c. Traitement du signal de mesure inertielle conventionnelle (14, 148) pour générer en temps réel un signal de modulation de fréquence (140, 420) non-linéaire en fonction du signal de mesure inertielle conventionnelle (14, 141, 148) enregistré en fonction du temps pendant la séquence d'impulsions laser,
   d. Modulation en temps réel de la fréquence optique centrale du laser (20) en fonction du signal de modulation (140, 420), de manière à moduler en temps réel ladite séquence d'impulsions laser (21, 22, 23, 29) et à générer un premier signal hybride (151) de mesure inertielle par interférométrie atomique corrigé en temps réel des mouvements relatifs du cadre de référence inertiel par rapport à la bouffée d'atomes froids (10) lors d'un cycle de mesure, et
   e. calcul d'un deuxième signal de mesure inertielle hybride (130, 132, 148, 149) en fonction du signal de mesure inertielle conventionnelle (14) et d'une partie (150) du premier signal hybride (151), génération d'un signal d'erreur (150, 170) par différence entre le signal (150, 155) de mesure inertielle par interférométrie atomique corrigé à une récurrence N du cycle de mesure et le signal (150, 155) de mesure inertielle par interférométrie atomique à une récurrence N-1, où N est un nombre entier naturel supérieur ou égal à deux pour en déduire le deuxième signal de mesure inertielle hybride (130, 132, 148, 149).

**Patentansprüche**

**1.** Hybrides Trägheitsmeßsystem mit:

   - einem kaltatominterferometrischen Trägheitssensor (50), der eine zum Erzeugen einer Laserimpulsfolge (21, 22, 23, 29) in Richtung auf eine Kaltatommenge (10) ausgelegte Laserquelle (20) und ein System zum Erfassen eines Signals einer Trägheitsmessung durch Atominterferometrie in Bezug auf einen Trägheitsreferenzrahmen aufweist, und
   - einem herkömmlichen Trägheitssensor (4, 100), der am Trägheitsreferenzrahmen des kaltatominterferometrischen Trägheitssensors (50) befestigt ist, wobei der herkömmliche Trägheitssensor (4, 100) dazu ausgelegt ist, ein Signal der herkömmlichen Trägheitsmessung (14, 148) des Trägheitsreferenzrahmens zu liefern,
   - wobei der herkömmliche Trägheitssensor (4, 100) dazu ausgelegt ist, das Signal der herkömmlichen Trägheitsmessung (14, 148) zu liefern, das in Abhängigkeit von der Zeit während der Laserimpulsfolge gespeichert worden ist, und
   das Hybridsystem ein elektronisches System mit Rückkopplungsschleife aufweist, das
   - ein Signalverarbeitungssystem (40, 41, 42) aufweist, das dazu ausgelegt ist, das Trägheitsmeßsignal (14, 141, 148) des herkömmlichen Trägheitssensors (4, 100) zu empfangen, wobei das Signalverarbeitungssystem (40, 41, 42) dazu ausgelegt ist, in Echtzeit in Abhängigkeit vom Signal der herkömmlichen Trägheitsmessung (14, 141, 148), das in Abhängigkeit von der Zeit während der Laserimpulsfolge gespeichert worden ist, ein nichtlineares Frequenzmodulationssignal (140, 420) zu erzeugen,
   - wobei jeder Laserimpuls der Laserimpulsfolge (21, 22, 23, 29) gegenüber einer zentralen optischen Frequenz (2) der Laserquelle (20) eine vorbestimmte Abweichung der optischen Frequenz aufweist, wobei das elektronische System mit Rückkopplungsschleife dazu ausgelegt ist, die zentrale optische Frequenz des Lasers (20) in Echtzeit in Abhängigkeit vom Modulationssignal (140, 420) zu modulieren, um die Laserimpulsfolge (21, 22, 23, 29) in Echtzeit zu modulieren und damit der kaltatominterferometrische Trägheitssensor (50) ein korrigiertes erstes hybrides Signal (151) der Trägheitsmessung durch Atominterferometrie der relativen Bewegungen des Trägheitsreferenzrahmens gegenüber der Kaltatommenge (10) während eines Meßzyklusses erzeugt,

**dadurch gekennzeichnet, daß** das hybride Trägheitsmeßsystem einen Rechner (30) aufweist, der dazu ausgelegt ist, einen Teil (150) des ersten hybriden Signals (151) zu empfangen, wobei der Rechner (30) dazu ausgelegt ist, in Abhängigkeit vom Signal der herkömmlichen Trägheitsmessung (14) und vom Teil (150) des vom kaltatominterferometrischen Trägheitssensor (50) kommenden ersten hybriden Signals ein zweites hybrides Trägheitsmeßsignal (130, 132, 148, 149) zu erzeugen, wobei der kaltatominterferometrische Trägheitssensor (50) dazu ausgelegt ist, für jeden Unterschied zwischen dem Signal (150, 155) einer Trägheitsmessung durch Atominterferometrie bei einer Wiederholungsfolge N des Meßzyklusses und dem Signal (150, 155) einer Trägheitsmessung durch Atominterferometrie bei einer Wiederholungsfolge N-1, wobei N eine natürliche ganze Zahl größer als oder gleich zwei ist, ein Fehlersignal (150, 170) zu erzeugen, und wobei der Rechner dazu ausgelegt ist, das Fehlersignal (150, 170) und einen ersten Teil des Trägheitsmeßsignals (14, 141) des herkömmlichen Trägheitssensors (4) zu empfangen, wobei der Rechner (30) dazu ausgelegt ist, daraus das zweite hybride Trägheitsmeßsignal (130, 132, 148, 149) abzuleiten.

2. Hybrides System gemäß Anspruch 1, bei dem der Trägheitsreferenzrahmen ein reflektierendes optisches Bauelement (8) aufweist, das so angeordnet ist, daß es die Laserimpulsfolge (21, 22, 23, 29) zurück reflektiert und eine gegenläufige Laserimpulsfolge in Richtung auf die Kaltatommenge (10) erzeugt, wobei der herkömmliche Trägheitssensor (4, 100) am reflektierenden optischen Bauelement (8) des kaltatominterferometrischen Trägheitssensors (50) befestigt ist.

3. Hybrides System gemäß einem der Ansprüche 1 bis 2, bei dem das Signalverarbeitungssystem (40, 41, 42) dazu ausgelegt ist, außerdem ein Phasenverschiebungskorrektursignal (412) der Laserquelle (20) zu erzeugen.

4. Hybrides System gemäß einem der Ansprüche 1 bis 3, das außerdem einen Phasensprunggenerator aufweist, der dazu ausgelegt ist, eine Probenahme zu erzeugen, die geeignet ist, eine Interferenzstreifenphasenmessung zu entnehmen.

5. Hybrides System gemäß einem der Ansprüche 1 bis 4, bei dem das Signalverarbeitungssystem (40, 41, 42) dazu ausgelegt ist, ein Frequenzmodulationssignal zu erzeugen, das eine lineare Modulationskomponente und eine nichtlineare Modulationskomponente in Abhängigkeit von der Zeit aufweist.

6. Hybrides System gemäß einem der Ansprüche 1 bis 5, bei dem der herkömmliche Trägheitssensor (4) ein Seismometer, einen Beschleunigungsmesser auf MEMS-Basis, ein Gyrometer auf MEMS-Basis, ein Lasergyrometer oder ein Gyrometer mit optischen Fasern aufweist.

7. Hybrides Trägheitsmeßsystem gemäß Anspruch 1, bei dem das Signalverarbeitungssystem (40, 41, 42) dazu ausgelegt ist, das zweite hybride Trägheitsmeßsignal zu empfangen, und bei dem das Signalverarbeitungssystem (40, 41, 42) dazu ausgelegt ist, einen Teil (130, 132, 148, 192) des zweiten hybriden Trägheitsmeßsignals als Ersatz für das Trägheitsmeßsignal (14, 141, 148) des herkömmlichen Trägheitssensors (4, 100) zu entnehmen und in Echtzeit ein nichtlineares Frequenzmodulationssignal (140, 420) in Abhängigkeit vom besagten Teil (130, 132, 148, 192) des zweiten hybriden Trägheitsmeßsignals zu erzeugen.

8. Hybrides System gemäß einem der Ansprüche 1 bis 7, das außerdem einen Koppler, der dazu ausgelegt ist, in Echtzeit einen weiteren Teil des vom herkömmlichen Trägheitssensor (4) kommenden Trägheitsmeßsignals (142) zu entnehmen, ein Tiefpaßfilter (9), das dazu ausgelegt ist, eine Gleichspannungskomponente des besagten weiteren Teils des Trägheitsmeßsignals (142) auszufiltern, einen Komparator (70), der dazu ausgelegt ist, eine Gleichspannungskomponente (19) des besagten weiteren Teils des herkömmlichen Trägheitsmeßsignals mit dem Signal der Trägheitsmessung durch Atominterferometrie (155) zu vergleichen, um daraus ein Verzerrungsfehlersignal (170) des herkömmlichen Trägheitssensors abzuleiten, aufweist und wobei der Rechner (30) dazu ausgelegt ist, das Verzerrungsfehlersignal (170) und den ersten Teil des Trägheitsmeßsignals (14, 141) des herkömmlichen Trägheitssensors zu empfangen, wobei der Rechner (30) dazu ausgelegt ist, in Echtzeit das zweite hybride Trägheitsmeßsignal (130) aus der Differenz zwischen dem ersten Teil des Trägheitsmeßsignals (14, 141) des herkömmlichen Trägheitssensors (4) und dem Verzerrungsfehlersignal (170) zu berechnen.

9. Hybrides Trägheitsmeßsystem gemäß einem der Ansprüche 1 bis 8, bei dem der Rechner (30) dazu ausgelegt ist, einen weiteren Teil des zweiten hybriden Trägheitsmeßsignals (131, 191) an einen Ausgang des hybriden Trägheitsmeßsystems zu übermitteln.

10. Hybrides Trägheitsmeßsystem gemäß einem der Ansprüche 1 bis 9, bei dem der herkömmliche Trägheitssensor (4, 100) und der Rechner (30) Teil einer Trägheitsnavigationszentrale (100) sind, die drei Beschleunigungsmesser, drei Gyrometer und einen Computer, der dazu ausgelegt ist, ein Trägheitsnavigationssignal auf der Grundlage der Messungen der drei Beschleunigungsmesser und der drei Gyrometer zu erzeugen, aufweist, wobei die Trägheitsnavigationszentrale dazu ausgelegt ist, den Teil (150) des ersten hybriden Signals (151) zu empfangen, wobei die Trägheitsnavigationszentrale (100) dazu ausgelegt ist, ein hybrides Trägheitsnavigationssignal (152) in Abhängigkeit des Trägheitsnavigationssignals und des Teils (150) des vom kaltatominterferometrischen Trägheitssensor (50) kommenden ersten hybriden Signals zu erzeugen.

11. Hybrides Trägheitsmeßsystem gemäß Anspruch 10, bei dem die Trägheitsnavigationszentrale dazu ausgelegt ist, einen Teil (150) des ersten hybriden Trägheitsmeßsignals (151) und/oder des zweiten hybriden Trägheitsmeßsignals (131, 191) zu empfangen und ein hybrides Trägheitsnavigationssignal zu erzeugen.

12. Hybrides System gemäß einem der Ansprüche 1 bis 11, bei dem der kaltatominterferometrische Trägheitssensor (50) dazu ausgelegt ist, ein Beschleunigungssignal durch atomare Interferometrie zu messen, wobei die Rückkopplungsschleife einen Mikroprozessor (41) aufweist, der dazu ausgelegt ist, das Beschleunigungssignal in Abhängigkeit von der Zeit zu integrieren, um daraus eine augenblickliche relative Geschwindigkeitsmessung des Trägheitsbezugsrahmens gegenüber der Atommenge (10) abzuleiten, und bei dem das Modulationssignal (420) der zentralen Frequenz des Lasers eine zur augenblicklichen Geschwindigkeitsmessung proportionale Flanke aufweist.

13. Hybrides Trägheitsmeßverfahren mit den folgenden Schritten:

a. Erzeugen einer Laserimpulsfolge (21, 22, 23, 29) in Richtung auf eine Kaltatommenge (10), wobei jeder Laserimpuls der Laserimpulsfolge (21, 22, 23, 29) einen vorbestimmten Unterschied in der optischen Frequenz in Bezug auf eine zentrale optische Frequenz (2) der Laserquelle (20) aufweist, und Erfassen eines Signals der Trägheitsmessung durch Atominterferometrie in Bezug auf einen Trägheitsbezugsrhmens;
b. Erfassen eines herkömmlichen Trägheitsmeßsignals (14, 148) des Trägheitsbezugsrahmens, das in Abhängigkeit von der Zeit während der Laserimpulsfolge gespeichert worden ist;
c. Verarbeiten des herkömmlichen Trägheitsmeßsignals (14, 148) um in Echtzeit in Abhängigkeit vom Signal der herkömmlichen Trägheitsmessung (14, 141, 148), das in Abhängigkeit von der Zeit während der Laserimpulsfolge gespeichert worden ist, ein nichtlineares Frequenzmodulationssignal (140, 420) zu erzeugen,
d. Echtzeitmodulation der zentralen optischen Frequenz des Lasers (20) in Abhängigkeit vom Modulationssignal (140, 420), um die Laserimpulsfolge (21, 22, 23, 29) in Echtzeit zu modulieren und um ein in Echtzeit korrigiertes erstes hybrides Signal (151) der Trägheitsmessung durch Atominterferometrie der relativen Bewegungen gegenüber der Kaltatommenge (10) bei einem Meßzyklus zu erzeugen, und
e. Berechnen eines zweiten hybriden Trägheitsmeßsignals (130, 132, 148, 149) in Abhängigkeit vom herkömmlichen Trägheitsmeßsignal (14) und eines Teils (150) des ersten hybriden Signals, Erzeugen eines Fehlersignals (150, 170) aus der Differenz zwischen dem korrigierten Signal (150, 155) einer Trägheitsmessung durch Atominterferometrie bei einer Wiederholungsfolge N des Meßzyklusses und dem Signal (150, 155) einer Trägheitsmessung durch Atominterferometrie bei einer Wiederholungsfolge N-1, wobei N eine natürliche ganze Zahl größer als oder gleich zwei ist, um daraus das zweite hybride Trägheitsmeßsignal (130, 132, 140, 148) abzuleiten.

**Claims**

1. A hybrid inertial measurement system comprising:

- a cold atom interferometric inertial sensor (50) comprising a laser source (20) adapted to generate a sequence of laser pulses (21, 22, 23, 29) towards a cold atom burst (10) and a system for detecting an atomic interferometry inertial measurement signal relating to an inertial reference frame, and
- a conventional inertial sensor (4, 100) attached to the inertial reference frame of the cold atom interferometric inertial sensor (50), the conventional inertial sensor (4, 100) being adapted to provide a conventional inertial measurement signal (14, 148) of the inertial reference frame,
- the conventional inertial sensor (4, 100) is adapted to provide the conventional inertial measurement signal (14, 148) recorded as a function of time during said laser pulse sequence,
and the hybrid system includes a feedback loop electronic system comprising:

- a signal processing system (40, 41, 42) adapted to receive the inertial measurement signal (14, 141, 148) from the conventional inertial sensor (4, 100), the signal processing system (40, 41, 42) being adapted to generate in real time a non-linear frequency modulation signal (140, 420) as a function of the conventional inertial measurement signal (14, 141, 148) recorded as a function of time during said laser pulse sequence,

each laser pulse of the laser pulse sequence (21, 22, 23, 29) having a predetermined optical frequency detuning with respect to a central optical frequency (2) of the laser source (20), the feedback loop electronic system being configured to modulate in real time the central optical frequency of the laser (20) as a function of the modulation signal (140, 420), so as to modulate in real time said laser pulse sequence (21, 22, 23, 29) and so that the cold atom interferometric inertial sensor (50) generates a first hybrid atomic interferometry inertial measurement signal (151) corrected for the relative movements of the inertial reference frame with respect to the cold atom burst (10) during a measurement cycle, **characterized in that**:

- the hybrid inertial measurement system comprises a calculator (30) adapted to receive a part (150) of the first hybrid signal (151), the calculator (30) being adapted to generate a second hybrid inertial measurement signal (130, 132, 148, 149) as a function of the conventional inertial measurement signal (14) and of the part (150) of the first hybrid signal provided by the cold atom interferometric inertial sensor (50), wherein the cold atom interferometric inertial sensor (50) is adapted to generate an error signal (150, 170) by difference between the corrected atomic interferometry inertial measurement signal (150, 155) at a recurrence N of the measurement cycle and the atomic interferometry inertial measurement signal (150, 155) at a recurrence N - 1, where N is a natural integer higher than or equal to two, and wherein the calculator (30) is adapted to receive the error signal (150, 170) and a first part of the inertial measurement signal (14, 141) of the conventional inertial sensor (4), the calculator (30) being adapted to deduce therefrom the second hybrid inertial measurement signal (130, 132, 148, 149).

2. The hybrid system according to claim 1, wherein the inertial reference frame includes a reflective optical component (8) arranged so as to retro-reflect the laser pulse sequence (21, 22, 23, 29) and to generate a sequence of contra-propagative laser pulses towards the cold atom burst (10), the conventional inertial sensor (4, 100) being attached to the reflective optical component (8) of the cold atom interferometric inertial sensor (50).

3. The hybrid system according to any one of claims 1 to 2, wherein the signal processing system (40, 41, 42) is adapted to further generate a signal (412) for correcting the phase-shift of the laser source (20).

4. The hybrid system according to any one of claims 1 to 3, further comprising a phase hopping generator configured to generate a sampling adapted to extract an interference fringe phase measurement.

5. The hybrid system according to any one of claims 1 to 4, wherein the signal processing system (40, 41, 42) is adapted to generate a frequency modulation signal comprising a linear modulation component and a non-linear modulation component as a function of time.

6. The hybrid system according to any one of claims 1 to 5, wherein the conventional inertial sensor (4) includes a seismometer, a MEMS-based accelerometer, a MEMS-based gyrometer, a laser gyrometer or a fibre-optic gyrometer.

7. The hybrid inertial measurement system according to claim 1, wherein the signal processing system (40, 41, 42) is adapted to receive the second hybrid inertial measurement signal and wherein the signal processing system (40, 41, 42) is adapted to sample a part of the second hybrid inertial measurement signal (130, 132, 148, 192) in replacement of the inertial measurement signal (14, 141, 148) of the conventional inertial sensor (4,100) and to generate in real time a non-linear frequency modulation signal (140, 420) as a function of said part of the second hybrid inertial measurement signal (130, 132, 148, 192).

8. The hybrid system according to any one of claims 1 to 7, further comprising a coupler configured to sample in real time another part of the inertial measurement signal (142) provided by the conventional inertial sensor (4), a low-pass filter (9) adapted to filter a continuous component of said other part of the inertial measurement signal (142), a comparator (70) adapted to compare a continuous component (19) of said other part of the conventional inertial measurement signal with the atomic interferometric inertial measurement signal (155) to deduce therefrom a conventional inertial sensor bias error signal (170), and the calculator (30) being adapted to receive the bias error signal (170) and the first part of the conventional inertial sensor inertial measurement signal (14, 141), the calculator (30) being adapted to calculate in real time the second hybrid inertial measurement signal (130) by difference between the first part of the inertial measurement signal (14, 141) of the conventional inertial sensor (4) and the bias error signal (170).

9. The hybrid inertial measurement system according to any one of claims 1 to 8, wherein the calculator (30) is adapted to transmit another part of the second hybrid inertial measurement signal (131, 191) towards an output of the hybrid inertial measurement system.

10. The hybrid inertial measurement system according to any one of claims 1 to 9 wherein the conventional inertial sensor (4, 100) and the calculator (30) are part of an inertial navigation unit (100) comprising three accelerometers, three gyrometers and one computer adapted to generate an inertial navigation signal based on the measurements of the three accelerometers and the three gyrometers, the inertial navigation unit being adapted to receive said part (150) of the first hybrid signal (151), the inertial navigation unit (100) being adapted to generate a hybrid inertial navigation signal (152) as a function of the inertial navigation signal and of the part (150) of the first hybrid signal provided by the cold atom interferometric inertial sensor (50).

11. The hybrid inertial measurement system according to claim 10, wherein the inertial navigation unit is adapted to receive a part (150) of the first hybrid inertial measurement signal (151) and/or of the second hybrid inertial measurement signal (131, 191) and to generate a hybrid inertial navigation signal.

12. The hybrid system according to any one of claims 1 to 11, wherein the cold atom interferometric inertial sensor (50) is configured to measure an atomic interferometric acceleration signal, the feedback loop comprising a microprocessor (41) adapted to integrate the acceleration signal as a function of time to deduce therefrom a measurement of relative instantaneous speed of the inertial reference frame with respect to the atom burst (10), and in that the modulation signal (420) of the laser central frequency includes a slope proportional to the instantaneous speed measurement.

13. A hybrid inertial measurement method comprising the following steps:

a. generating a sequence of laser pulses (21, 22, 23, 29) towards a cold atom burst (10), each laser pulse of the laser pulse sequence (21, 22, 23, 29) having a predetermined optical frequency detuning with respect to a central optical frequency (2) of the laser source (20), and detecting an atomic interferometry inertial measurement signal relating to an inertial reference frame;
b. detecting a conventional inertial measurement signal (14, 148) of the inertial reference frame recorded as a function of time during the laser pulse sequence;
c. processing the conventional inertial measurement signal (14, 148) to generate in real time a non-linear frequency modulation signal (140, 420) as a function of the conventional inertial measurement signal (14, 141, 148) recorded as a function of time during the laser pulse sequence;
d. modulating in real time the central optical frequency of the laser (20) as a function of the modulation signal (140, 420), so as to modulate in real time said laser pulse sequence (21, 22, 23, 29) and to generate a first hybrid atomic interferometry inertial measurement signal (151) corrected in real time for the relative movements of the inertial reference frame with respect to the cold atom burst (10) during a measurement cycle, and
e. calculating a second hybrid inertial measurement signal (130, 132, 148, 149) as a function of the conventional inertial measurement signal (14) and of the part (150) of the first hybrid signal, generating an error signal (150, 170) by difference between the corrected atomic interferometry inertial measurement signal (150, 155) at a recurrence N of the measurement cycle and the atomic interferometry inertial measurement signal (150, 155) at a recurrence N - 1, where N is a natural integer higher than or equal to two, to deduce therefrom the second hybrid inertial measurement signal (130, 132, 148, 149).

Fig.1

Fig.2

Fig.3

**Fig.4A**
ART ANT.

**Fig.4B**
ART ANT.

**Fig.4C**
ART ANT.

# Fig.5

# Fig.8

**Fig.6**

**Fig.7**

**Fig.9A**

**Fig.9B**

**Fig.9C**

**Fig.9D**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. LE GOUËT et al.** Limits of the sensitivity of a low noise compact atomic gravimeter. *Appl. Phys. B,* 2008, vol. 92, 133-144
- **S. MERLET et al.** Operating an atom interferometer beyond its linear range. *Metrologia,* 2009, vol. 46, 87-94
- **R. GEIGER et al.** Detecting inertial effects with airborne matter-wave interferometry. *Nature Comm.,* 2011, vol. 2, 474
- **J. LAUTIER et al.** *Hybridizing matter-wave and classical accelerometers*
- **WILLS KARA.** *Air Force Institute of Technology AFIT Scholar Theses and Dissertations Student Graduate Works Signal Processing in Cold Atom Interferometry Based INS,* 01 Janvier 2014, 43